# EUROPEAN PATENT SPECIFICATION

(11) **EP 4 357 227 B1**
(45) Date of publication and mention of the grant of the patent: **25.11.2026**
(21) Application number: 24162832.0
(22) Date of filing: 05.02.2018
(51) Int. Cl.: B60Q 1/12, B60Q 1/14, B62J 6/023

(54) **LEANING-VEHICLE HEADLIGHT APPARATUS, AND LEANING VEHICLE**
SCHEINWERFERVORRICHTUNG VON NEIGENDEM FAHRZEUG UND NEIGENDES FAHRZEUG
APPAREIL DE PHARE DE VÉHICULE INCLINABLE ET VÉHICULE INCLINABLE

(30) Priority: 14.03.2017 JP 2017048901
(43) Date of publication of application: 24.04.2024
(62) Document number(s) of the earlier application(s) in accordance with Art. 76 EPC: 18767484.1 / 3 530 556
(73) Proprietor: Yamaha Hatsudoki Kabushiki Kaisha, Iwata-shi, Shizuoka 438-8501 (JP)
(72) Inventor: INOUE, Takehiro, Iwata-shi, Shizuoka 438-8501 (JP); KIMURA, Yumi, Iwata-shi, Shizuoka 438-8501 (JP)
(74) Representative: Stöckeler, Ferdinand

(56) References cited:
- EP-A1- 2 657 076
- EP-A1- 3 000 700
- WO-A1-2016/006138
- US-A1- 2014 268 837

## Description

### TECHNICAL FIELD

The present invention relates to a leaning-vehicle headlight apparatus, and a leaning vehicle that includes the headlight apparatus.

### BACKGROUND ART

Motorcycles and the like are known as leaning vehicles. When a leaning vehicle is turning left, the vehicle body leans in the leaning-vehicle leftward direction, and when a leaning vehicle is turning right, the vehicle body leans in the leaning-vehicle rightward direction. Such leaning vehicles include a headlight unit that is capable of operating in a low-beam mode and a high-beam mode.

A leaning vehicle that includes a headlight unit is disclosed, for example, in Japanese Patent Application Publication No. 2016-64723 (Patent Literature 1). The leaning vehicle disclosed in Patent Literature 1 includes a headlight unit and an irradiation region addition-type sub-light unit. The headlight unit can operate in a low-beam mode and a high-beam mode. The irradiation region addition-type sub-light unit forms an irradiation region that supplements irradiation regions of a low beam and a high beam of the headlight unit. It is stated in Patent Literature 1 that by this means various irradiation regions can be formed in a state in which the vehicle body of the leaning vehicle is leaning in the leaning-vehicle leftward or rightward direction.

### CITATION LIST

### PATENT LITERATURE

Patent Literature 1: Japanese Patent Application Publication No. 2016-64723

EP 3 000 700 A1 discloses a head lamp system and a straddled vehicle. During an operation in a low beam mode, a main illumination range is irradiated with light by a first head lamp. During the operation in the low beam mode, when a leftward bank angle of a vehicle is equal to a first threshold value or larger than the first threshold value, a first auxiliary illumination range is irradiated with light by a first sub-lamp. During the operation in the low beam mode, when a rightward bank angle of the vehicle is equal to a second threshold value or larger than the second threshold value, a second auxiliary illumination range is irradiated with light by a second sub-lamp. During an operation in a high beam mode, at least a second main illumination range is irradiated with light by a second head lamp, and the first and second auxiliary illumination ranges are irradiated with light at all times by the first and second sub- lamps.

EP 2 657 076 A1 discloses a headlight unit for vehicles that lean into turns and a method for illumination of forward and outward area of vehicles that lean into turns. The headlight unit can suppress the target view of an operator from appearing dark in the process of increasing or decreasing the lean angle of the vehicle. The headlight unit for a vehicle that leans into turns includes a first light source, and a plurality of second light sources. The plurality of second light sources has illumination ranges positioned outward of an illumination range of the first light source and at different positions relative to the vertical direction of the vehicle in the upright state of the vehicle. The brightnesses of the second light sources vary according to the lean angle of the vehicle. The second light sources have predetermined brightnesses when the lean angle of the vehicle is at a reference value individually set for each of the second light sources, and wherein the illumination ranges of the second light sources are positioned further upward for the second light sources having larger reference values in the upright state of the vehicle. When the lean angle of the vehicle reaches a specific value greater than the reference value set for one of the second light sources, and the first light source and an upper second light source having a larger reference value than the one of the second light source are on, the one of the second light sources becomes darker than the predetermined brightness.

US 2014/268837 A1 discloses a vehicle headlamp system that includes a headlamp assembly having a light source and a beam pattern panel. The beam pattern panel includes one or more regions capable of changing between opaque and transparent light-transmission states to selectively allow light from the light source to pass through the panel. The panel may be an LCD panel with a plurality of liquid crystal elements arranged in an array with the ability to provide a plurality of different beam patterns. The beam pattern may be determined and changed in real time based on information received at a system processor about one or more vehicle and/or road conditions. The headlamp system can direct a projected light beam into a curve in the road ahead and/or automatically change the direction of the projected beam to avoid shining light directly at oncoming drivers.

WO 2016/006138 A1 discloses a headlight module comprises a light source, and an optical element. The light source emits light. The optical element includes: a reflective surface that reflects the light emitted from the light source; and an emission surface that emits the light reflected by the reflective surface. The emission surface has a positive refractive power. In the optical axis direction of the emission surface, an end on the emission surface side of the reflective surface includes a point located at the focal position of the emission surface.

### SUMMARY OF INVENTION

### TECHNICAL PROBLEM

As described above, in a leaning vehicle, it is desirable that when the vehicle body leans in the leftward direction or leans in the rightward direction, the headlight unit irradiate various irradiation regions. Accordingly, for a leaning vehicle, it is desirable to increase the degree of design freedom with respect to the irradiation regions of a headlight unit in a state in which the vehicle body leans in the leaning-vehicle leftward or rightward direction.

An object of the present invention is to provide a leaning-vehicle headlight apparatus that can increase the degree of design freedom with respect to irradiation regions of a headlight unit in a state in which the vehicle body is leaning, and a leaning vehicle.

### SOLUTION TO PROBLEM

The present inventors conducted more detailed studies regarding travelling environments in a state in which the vehicle body of a leaning vehicle is leaning. As a result, the present inventors discovered that, depending on the travelling environment, in some cases it is desirable to design irradiation regions that cannot be formed with an irradiation region addition-type sub-light unit.

Examples of a case in which it is desirable to design an irradiation region as described above include a case where, when the vehicle body of a leaning vehicle is leaning in the leaning-vehicle leftward direction, it is desired to reduce the amount of light of an irradiation region that illuminates the road surface that is located to the lower-left of the rider. More specifically, the headlight unit and the irradiation region addition-type sub-light unit approach the road surface that is located to the lower-left of the leaning vehicle as the vehicle body leans in the leaning-vehicle leftward direction. When the headlight unit and the irradiation region addition-type sub-light unit approach the road surface, the road surface that is located to the lower-left of the rider in the leaning-vehicle lower-left direction is illuminated more brightly relative to the surrounding area. Therefore, in some cases the rider wishes to reduce the amount of light of the irradiation region that illuminates the road surface that is located to the lower-left of the rider in the leaning-vehicle lower-left direction.

Another example of a case where it is desirable to design an irradiation region as described above is a case where, when the vehicle body of a leaning vehicle is leaning in the leaning-vehicle leftward direction, it is desired to reduce the amount of light of an irradiation region that illuminates the road surface that is located to the lower-right of the rider in the leaning-vehicle lower-right direction. More specifically, when a leaning vehicle is turning left, the line of sight of the rider is directed in the leaning-vehicle left-front direction. That is, when the leaning vehicle is turning left, as far as the rider is concerned, the necessity for the headlight unit to illuminate the road surface that is located to the lower-right of the rider in the leaning-vehicle lower-right direction is low. Thus, in some cases it is desirable to reduce the amount of light of an irradiation region that illuminates the road surface in the leaning-vehicle lower-right direction from the rider's perspective.

There are numerous travelling environments which are desirable to take into consideration when designing irradiation regions in this manner, with such travelling environments varying according to the state of the road surface while travelling, the leaning state of the vehicle body of the leaning vehicle, and the travelling speed of the leaning vehicle and the like. Thus, it has been revealed that, when using an irradiation region addition-type sub-light unit that forms irradiation regions that supplement irradiation regions of a low beam and a high beam of a headlight unit, it is difficult to form irradiation regions that correspond to numerous travelling environments.

Therefore, rather than the conventional technical concept of adding an irradiation region that is required when the vehicle body of a leaning vehicle leans in the leaning-vehicle leftward or rightward direction, the present inventors conceived of a technical concept which is opposite to conventional technical concept, namely, to dim or turn off a light source that forms an irradiation region for which the necessity is low when the vehicle body of a leaning vehicle leans in the leaning-vehicle leftward or rightward direction. The present inventors have newly created combination patterns of irradiation regions that are different from combination patterns of the conventional technology for a time when the vehicle body of a leaning vehicle leans in the leaning-vehicle leftward or rightward direction. Further, the present inventors have newly created a control device that is required for forming irradiation regions which are different from the conventional technology.

A leaning vehicle according to the present invention has been completed based on the findings described above.

The scope of protection is defined by the appended claims.

The aforementioned objects and other objects, features, aspects and advantages of the present invention will become more apparent from the following detailed description of embodiments of the invention that are described in association with the attached drawings.

As used herein, the term "and/or" includes any and all combinations of one or more of the associated listed items.

It will be further understood that the terms "including", "comprising" or "having" and variations thereof when used in this specification, specify the presence of stated features, steps, operations, elements, components, and/or their equivalents but can encompass one or more of steps, operations, elements, components and/or groups thereof.

Unless otherwise defined, all terms (including technical and scientific terms) used herein have the same meaning as commonly understood by one having ordinary skill in the art to which this invention belongs.

It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

In describing the invention, it will be understood that the number of techniques and steps are disclosed. Each of these has individual benefit and each can also be used in conjunction with one or more, or in some cases all, of the other disclosed techniques. Accordingly, for the sake of clarity, this description will not repeat every possible combination of the individual steps in an unnecessary fashion.

In the following description, for the purpose of explanation, numerous specific details are set forth in order to provide a thorough understanding of the present invention. It will be evident, however, to one skilled in the art that the present invention may be practiced without these specific details. The present disclosure is to be considered as an exemplification of the invention, and is not intended to limit the invention to the specific embodiments illustrated by the figures or description below.

### ADVANTAGEOUS EFFECT OF INVENTION

The leaning vehicle according to the present invention can increase the degree of design freedom with respect to irradiation regions of a headlight unit when the vehicle body is in a leaning state.

### BRIEF DESCRIPTION OF DRAWINGS

[FIG. 1] FIG. 1 is a view illustrating a leaning vehicle 1, a leaning-vehicle headlight apparatus 8, a headlight unit 10 and an irradiation region 200 of the headlight unit 10.
[FIG. 2] FIG. 2 is a view illustrating the leaning vehicle 1 as seen in the leaning-vehicle (1) frontward direction.
[FIG. 3] FIG. 3 is a drawing of longitudinal section illustrating the vicinity of the headlight unit 10.
[FIG. 4] FIG. 4 is a front view of lower-center inner lenses 41, upper-center inner lenses 42, a lower-left inner lens 43, an upper-left inner lens 44, a lower-right inner lens 45 and an upper-right inner lens 46.
[FIG. 5] FIG. 5 is a perspective view of the headlight unit 10.
[FIG. 6] FIG. 6 is a view illustrating the irradiation region 200 in a case where a vehicle body 6 leans in the leftward direction L.
[FIG. 7] FIG. 7 is a view illustrating the irradiation region 200, which does not form part of the present invention, in a case where the vehicle body 6 leans in the leftward direction L.
[FIG. 8] FIG. 8 is a view illustrating the irradiation region 200 in a case where the vehicle body 6 leans in the leftward direction L.
[FIG. 9] FIG. 9 is a view illustrating the irradiation region 200, which does not form part of the present invention, in a case where the vehicle body 6 leans in the leftward direction L.
[FIG. 10] FIG. 10 is a view illustrating the irradiation region 200 in a case where the vehicle body 6 leans in the leftward direction L.
[FIG. 11] FIG. 11 is a view illustrating an irradiation region determination table of Table 1 by means of a flowchart, which does not form part of the present invention.
[FIG. 12] FIG. 12 is a view illustrating an irradiation region 200a according to a first modification.
[FIG. 13] FIG. 13 is a view illustrating an irradiation region 200b according to a second modification.
[FIG. 14] FIG. 14 is a view illustrating a leaning vehicle 1A and an irradiation region 200A of a headlight unit 10A.
[FIG. 15] FIG. 15 is a block diagram, which does not form part of the present invention, of a leaning-vehicle headlight apparatus 8A.
[FIG. 16] FIG. 16 is a front view of light sources of the headlight unit 10A.
[FIG. 17] FIG. 17 is a front view of the lower-center inner lenses 41, the upper-center inner lenses 42, lower-left inner lenses 43A to 43C, upper-left inner lenses 44A to 44C, lower-right inner lenses 45A to 45C, and upper-right inner lenses 46A to 46C.
[FIG. 18] FIG. 18 is a perspective view of the headlight unit 10A.
[FIG. 19] FIG. 19 is a view illustrating the irradiation region 200A in a case where the vehicle body 6 leans in the leftward direction L.
[FIG. 20] FIG. 20 is a view illustrating the irradiation region 200A of the leaning vehicle 1A.

### DESCRIPTION OF EMBODIMENTS

### (First Embodiment)

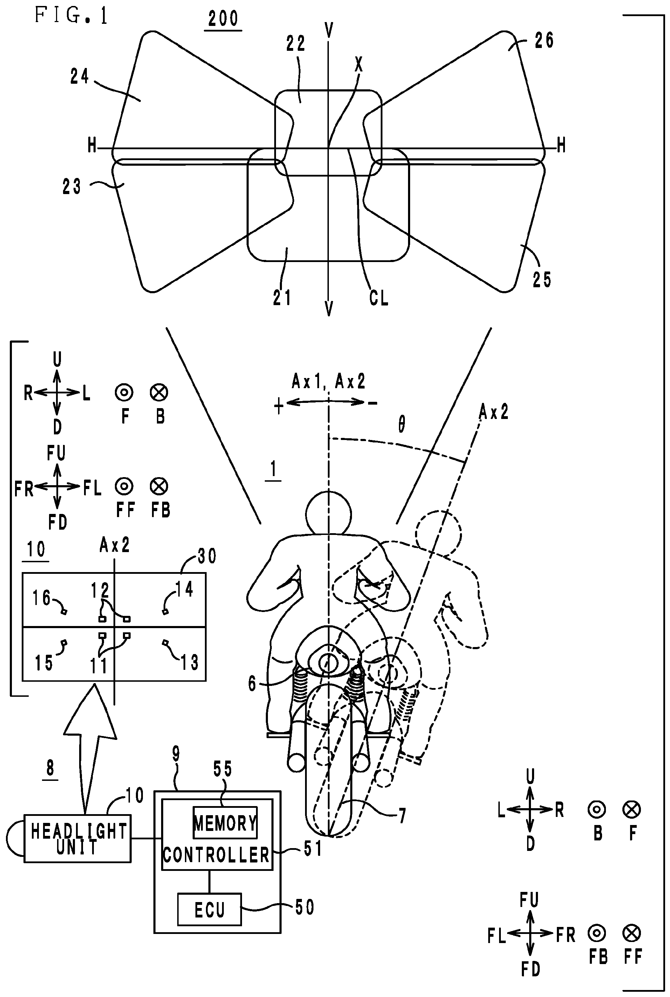

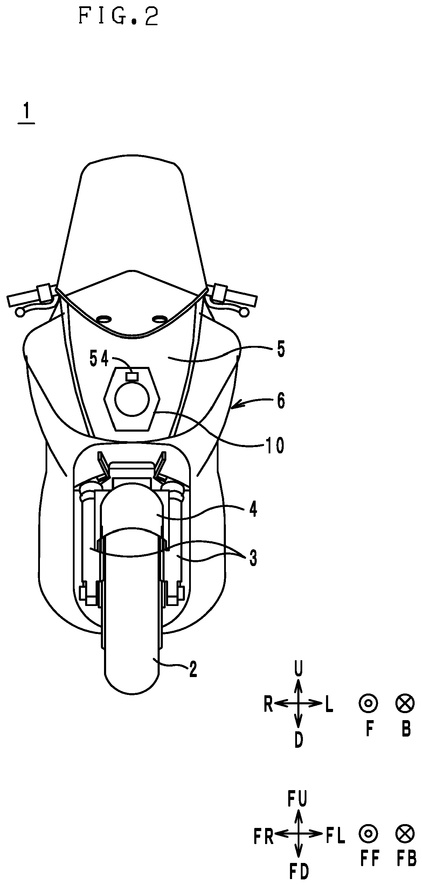

Hereunder, a leaning-vehicle headlight apparatus 8 and a leaning vehicle 1 according to a first embodiment of the present invention are described with reference to the accompanying drawings. In the present embodiment, a motorcycle (hereinafter, called a "leaning vehicle") having a vehicle body frame that is capable of leaning, one front wheel, and one rear wheel is described as one example of a leaning vehicle. FIG. 1 is a view that illustrates the leaning vehicle 1, the leaning-vehicle headlight apparatus 8, a headlight unit 10, and an irradiation region 200 of the headlight unit 10. FIG. 2 is a view illustrating the leaning vehicle 1 as seen in the leaning-vehicle (1) frontward direction.

Hereinafter, the leaning-vehicle (1) frontward direction is referred to as the frontward direction "F". The leaning-vehicle (1) backward direction is referred to as the backward direction "B". The leaning-vehicle (1) leftward direction is referred to as the left "L". The leaning-vehicle (1) rightward direction is referred to as the right "R". The leaning-vehicle (1) upward direction is referred to as the upward direction "U". The leaning-vehicle (1) downward direction is referred to as the downward direction "D". The leaning-vehicle (1) front-back direction is referred to as the front-back direction "FB". The leaning-vehicle (1) left-right direction is referred to as the left-right direction "LR". The leaning-vehicle (1) up-down direction is referred to as the up-down direction "UD". The leaning-vehicle (1) frontward direction refers to the direction of travel of the leaning vehicle 1. The leaning-vehicle (1) backward direction refers to the opposite direction of the direction of travel of the leaning vehicle 1. The leaning-vehicle (1) leftward direction refers to the left when taking a rider who straddles the leaning vehicle 1 as a reference. The leaning-vehicle (1) rightward direction refers to the right when taking a rider who is astride the leaning vehicle 1 as a reference. The leaning-vehicle (1) upward direction refers to the upward direction when taking a rider who is astride the leaning vehicle 1 as a reference. The leaning-vehicle (1) downward direction refers to the downward direction when taking the rider who is astride the leaning vehicle 1 as a reference.

Further, in the leaning vehicle 1, the vehicle body 6 can lean to the left L or the right R. In a case where the vehicle body 6 leans in the leftward direction L or rightward direction R, the vehicle-body (6) up-down and left-right directions do not match the leaning-vehicle (1) up-down direction UD and the leaning-vehicle (1) left-right direction LR, respectively. On the other hand, the vehicle-body (6) up-down and left-right directions in an upright state match the leaning-vehicle (1) up-down direction UD and the leaning-vehicle (1) left-right direction LR, respectively. Hereinafter, the vehicle-body (6) frontward direction is referred to as the frontward direction "FF". The vehicle-body (6) backward direction is referred to as the backward direction "FB". The vehicle-body (6) leftward direction is referred to as the leftward direction "FL". The vehicle-body (6) rightward direction is referred to as the rightward direction "FR". The vehicle-body (6) upward direction is referred to as the upward direction "FU". The vehicle-body (6) downward direction is referred to as the downward direction "FD". The vehicle-body (6) front-back direction is referred to as the front-back direction "FFB". The vehicle-body (6) left-right direction is referred to as the left-right direction "FLR". The vehicle-body (6) up-down direction is referred to as the up-down direction "FUD".

In this specification, an axis or a member extending in the front-back direction does not necessarily refer to only an axis or a member that is parallel with the front-back direction. In this specification, an axis or a member extending in the front-back direction refers to an axis or a member that is inclined within a range of ±45° with respect to the front-back direction. Similarly, herein, an axis or a member extending in the up-down direction refers to an axis or a member that is inclined within a range of ±45° with respect to the up-down direction. Likewise, herein, an axis or a member extending in the left-right direction refers to an axis or a member that is inclined within a range of ±45° with respect to the left-right direction. Further, the term "state in which the vehicle body 6 is upright" means a state in which the front wheel is not steering or leaning, in a state in which a rider is not riding on the leaning vehicle 1 and there is no fuel in the leaning vehicle 1.

In this specification, the term "a first member is supported by a second member" includes a case where the first member is attached to the second member in a manner in which the first member is not movable with respect to the second member (that is, is fixed to the second member), and a case where the first member is attached to the second member in a manner in which the first member is movable with respect to the second member. Further, the term "a first member is supported by a second member" includes both a case in which the first member is directly attached to the second member and a case in which the first member is attached to the second member via a third member.

In this specification, the term "a first member and a second member that are aligned in the front-back direction" refers to the following state. That is, a state in which, when the first member and the second member are viewed from a direction that is perpendicular to the front-back direction, both of the first member and the second member are disposed on an arbitrary straight line that indicates the front-back direction. In this specification, the term "a first member and a second member that are aligned in the front-back direction as viewed from the up-down direction" refers to the following state. That is, a state in which, when the first member and the second member are viewed from the up-down direction, both of the first member and the second member are disposed on an arbitrary straight line that indicates the front-back direction. In this case, when the first member and the second member are viewed from a left-right direction that is different from the up-down direction, one of the first member and the second member need not be disposed on an arbitrary straight line that indicates the front-back direction. Note that, the first member and the second member may contact each other. The first member and the second member may be separate from each other. A third member may be present between the first member and the second member. The foregoing definitions also apply to directions other than the front-back direction.

**In** this specification, the term "a first member is disposed further forward than a second member" indicates the following state. That is, the first member is disposed in the front of a plane orthogonal to the front-back direction which passes through the front end of the second member. **In** this case, the first member and the second member may be aligned in the front-back direction, or need not be aligned in the front-back direction. This definition also applies to directions other than the front-back direction.

**In** this specification, the term "a first member is disposed in front of a second member" indicates the following state. That is, at least one part of the first member is disposed within a region that the second member will pass through if the second member is translated in the forward direction. Hence, the entire first member may fit within a region that the second member will pass through if the second member is translated in the forward direction, or the first member may protrude from a region that the second member will pass through if the second member is translated in the forward direction. **In** this case, the first member and the second member are aligned in the front-back direction. Note that, in a case where two small irradiation regions (described in detail later) are aligned in the front-back direction, a part of each of the two small irradiation regions may overlap with each other. This definition also applies to directions other than the front-back direction.

**In** this specification, the term "a first member is disposed in front of a second member as viewed from the left-right direction" indicates the following state. That is, as viewed from the left-right direction, the first member and the second member are aligned in the front-back direction, and as viewed from the left-right direction, a portion that faces the second member of the first member is disposed in front of the second member. With respect to this definition, the first member and the second member need not be aligned three-dimensionally in the front-back direction. This definition also applies to directions other than the front-back direction.

In this specification, unless expressly stated otherwise, the respective portions of a first member are defined as follows. The term "front portion" of the first member means the front half of the first member. The term "rear portion" of the first member means the rear half of the first member. The term "left portion" of the first member means the left half of the first member. The term "right portion" of the first member means the right half of the first member. The term "upper portion" of the first member means the upper half of the first member. The term "lower portion" of the first member means the lower half of the first member. The term "top end" of the first member means the upper end of the first member. The term "bottom end" of the first member means the lower end of the first member. The term "front end" of the first member means the end at the front of the first member. The term "rear end" of the first member means the end at the rear of the first member. The term "right end" of the first member means the end on the right side of the first member. The term "left end" of the first member means the end on the left side of the first member. The term "top end portion" of the first member means the top end of the first member and the vicinity of the top end. The term "bottom end portion" of the first member means the bottom end of the first member and the vicinity of the bottom end. The term "front end portion" of the first member means the front end of the first member and the vicinity of the front end. The term "rear end portion" of the first member means the rear end of the first member and the vicinity of the rear end. The term "right end portion" of the first member means the right end of the first member and the vicinity of the right end. The term "left end portion" of the first member means the left end of the first member and the vicinity of the left end. The term "first member" means a member constituting part of the leaning vehicle 1.

In this specification, the term "leaning angle" means an angle formed between the vertical direction and the vehicle-body upward direction U. The leaning angle is 0° or more and less than 90°.

In this specification, the term "vehicle body" means a vehicle body that has a frame structure, a vehicle body that has a monocoque structure, and a vehicle body that has a semi-monocoque structure.

In this specification, the term "irradiation region" means an irradiation region that a headlight unit projects onto a screen by a method specified in JIS D1619 (1977).

In this specification, the term "central axis of the headlight unit" refers to an axis line extending in the front-back direction in the vehicle body which intersects with a vertical line that passes through the optical center of the irradiation region of the headlight unit and with a horizontal line that passes through the optical center of the irradiation region of the headlight unit.

Hereunder, embodiments of the present invention are described in detail with reference to the accompanying drawings. The same reference symbols are used throughout the drawings to refer to the same or like portions, and a description thereof is not repeated.

As illustrated in FIG. 1, the leaning vehicle 1 includes a front wheel 2 (see FIG. 2), the vehicle body 6, a rear wheel 7 and the leaning-vehicle headlight apparatus 8.

### [Vehicle Body]

The vehicle body 6 leans in the leftward direction L when turning left, and leans in the rightward direction R when turning right. In the following description, as illustrated in FIG. 1, an angle that a center line Ax2 of the vehicle body 6 forms with respect to a vertical axis Ax1 extending in the up-down direction UD is defined as a leaning angle θ. The center line Ax2 is a straight line that, when viewed from the front FF, is located at the center in the left-right direction FLR of the vehicle body 6 and extends in the up-down direction FUD. When the vehicle body 6 leans in the leftward direction L or rightward direction R, the center line Ax2 inclines to the left L or right R. The leaning angle θ takes a positive value when the vehicle body 6 leans in the leftward direction L, and takes a negative value when the vehicle body 6 leans in the rightward direction R. As illustrated in FIG. 2, the vehicle body 6 includes a vehicle body frame (not illustrated), a front fork 3, a front fender 4 and a front cowl 5. The vehicle body 6 also includes an unshown handle, seat and engine and the like as principal components. The vehicle body frame supports the principal components such as the handle, seat and engine.

The front fork 3 is arranged at the front portion of the vehicle body 6. The front fork 3 is supported by a head pipe (not illustrated) of the vehicle body frame. The front wheel 2 is supported by the front fork 3. The front wheel 2 can rotate around a front axle that is provided at a bottom end portion of the front fork 3. The front fender 4 is disposed above FU the front wheel 2. The front cowl 5 is disposed above FU the front fender 4. The front cowl 5 is disposed in front FF of the head pipe that is one part of the vehicle body frame.

### [Headlight Unit]

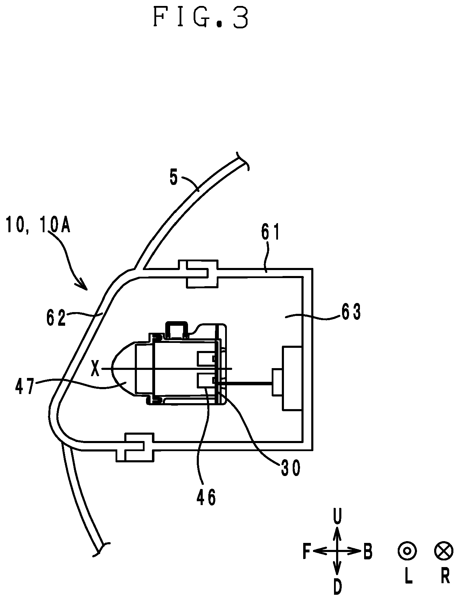

As illustrated in FIG. 1, the leaning-vehicle headlight apparatus 8 includes a control device 9, the headlight unit 10 and a photodetector camera 54 (see FIG. 2). Hereunder, the headlight unit 10 will be described while referring to the accompanying drawings. FIG. 3 is a drawing of longitudinal section of the vicinity of the headlight unit 10.

As illustrated in FIG. 3, the headlight unit 10 is attached to the front cowl 5. However, a member to which the headlight unit 10 can be attached is not limited to the front cowl 5. For example, the headlight unit 10 may be attached to a bracket that is supported by the vehicle body frame of the vehicle body 6.

As illustrated in FIG. 3, the vehicle body 6 includes a housing 61 and an outer cover 62. The housing 61 is a box-shaped member having an opening in a face on the front FF side thereof. The outer cover 62 is disposed in front FF of the opening of the housing 61 to thereby block the opening of the housing 61. The outer cover 62 is a transparent member that is made from resin or the like. Thus, a headlight chamber 63 is formed by assembling together the housing 61 and the outer cover 62. The headlight unit 10 is housed inside the headlight chamber 63. Further, the headlight unit 10 is supported by the housing 61. However, the headlight unit 10 may be directly supported by the housing 61, or may be indirectly supported by the housing 61 via another member. Light that the headlight unit 10 radiates passes through the outer cover 62 and is radiated to the front F of the leaning vehicle 1. Thus, the headlight unit 10 radiates light toward the front F of the leaning vehicle 1.

As illustrated in FIG. 1, the headlight unit 10 includes two lower-center light emitting diodes 11, two upper-center light emitting diodes 12, a lower-left light emitting diode 13, an upper-left light emitting diode 14, a lower-right light emitting diode 15 and an upper-right light emitting diode 16.

As illustrated in FIG. 1, the two lower-center light emitting diodes 11 (one example of a lower-center light source) radiate light that forms a lower-center irradiation region 21 (described in detail later) to the front FF. The lower-center irradiation region 21 includes a top-end-passing straight line CL that extends in the left-right direction FLR at the top end thereof. That is, the two lower-center light emitting diodes 11 radiate a low beam.

As illustrated in FIG. 1, the two upper-center light emitting diodes 12 (one example of an upper-center light source) are disposed above FU the two lower-center light emitting diodes 11. The two upper-center light emitting diodes 12 radiate light that forms an upper-center irradiation region 22 (described in detail later) to the front FF. That is, the two upper-center light emitting diodes 12 radiate a high beam.

The lower-left light emitting diode 13 (one example of a lower-left light source) is disposed in the lower left FLD of the two lower-center light emitting diodes 11. The lower-left light emitting diode 13 radiates light that forms a lower-left small irradiation region 23 (described in detail later) to the front FF.

The upper-left light emitting diode 14 (one example of an upper-left light source) is disposed in the upper left FLU of the two upper-center light emitting diodes 12. The upper-left light emitting diode 14 radiates light that forms an upper-left small irradiation region 24 (described in detail later) to the front FF.

The lower-right light emitting diode 15 (one example of a lower-right light source) is disposed in the lower right FRD of the two lower-center light emitting diodes 11. The lower-right light emitting diode 15 radiates light that forms a lower-right small irradiation region 25 (described in detail later) to the front FF. The lower-right light emitting diode 15 is disposed in linear symmetry with the lower-left light emitting diode 13 with respect to the center line Ax2.

The upper-right light emitting diode 16 (one example of an upper-right light source) is disposed in the upper-right FRU of the two upper-center light emitting diodes 12. The upper-right light emitting diode 16 radiates light that forms an upper-right small irradiation region 26 (described in detail later) to the front FF. The upper-right light emitting diode 16 is disposed in linear symmetry with the upper-left light emitting diode 14 with respect to the center line Ax2.

### [Inner Lens]

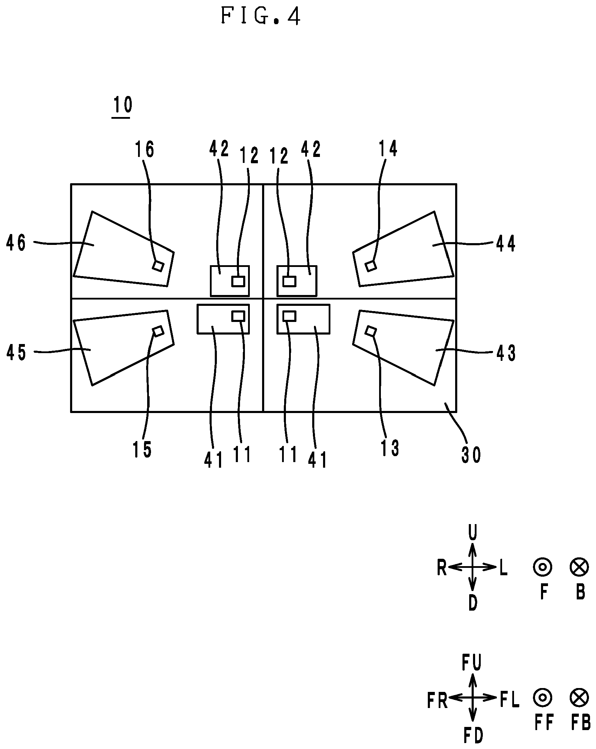

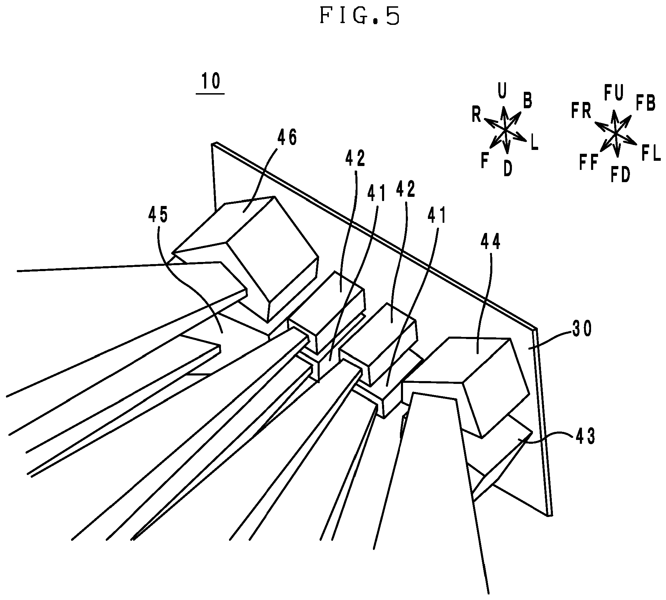

FIG. 4 is a front view of lower-center inner lenses 41, upper-center inner lenses 42, a lower-left inner lens 43, an upper-left inner lens 44, a lower-right inner lens 45 and an upper-right inner lens 46. FIG. 5 is a perspective view of the headlight unit 10. In FIG. 5, a state in which the lower-center light emitting diodes 11, the upper-center light emitting diodes 12, the lower-left light emitting diode 13, the upper-left light emitting diode 14, the lower-right light emitting diode 15 and the upper-right light emitting diode 16 are all radiating light is schematically illustrated.

As illustrated in FIG. 4, the headlight unit 10 also includes the lower-center inner lenses 41, the upper-center inner lenses 42, the lower-left inner lens 43, the upper-left inner lens 44, the lower-right inner lens 45 and the upper-right inner lens 46. The lower-center inner lenses 41 are disposed in front FF of the lower-center light emitting diodes 11. The upper-center inner lenses 42 are disposed in front FF of the upper-center light emitting diodes 12. The lower-left inner lens 43 is disposed in front FF of the lower-left light emitting diode 13. The upper-left inner lens 44 is disposed in front FF of the upper-left light emitting diode 14. The lower-right inner lens 45 is disposed in front FF of the lower-right light emitting diode 15. The upper-right inner lens 46 is disposed in front FF of the upper-right light emitting diode 16. As illustrated in FIG. 5, the lower-center inner lenses 41, the upper-center inner lenses 42, the lower-left inner lens 43, the upper-left inner lens 44, the lower-right inner lens 45 and the upper-right inner lens 46 collect divergent light rays radiated by the lower-center light emitting diodes 11, the upper-center light emitting diodes 12, the lower-left light emitting diode 13, the upper-left light emitting diode 14, the lower-right light emitting diode 15 and the upper-right light emitting diode 16, respectively, and cause the light to be emitted to the front FF. The shapes of the lower-center inner lenses 41, the upper-center inner lenses 42, the lower-left inner lens 43, the upper-left inner lens 44, the lower-right inner lens 45 and the upper-right inner lens 46 correspond to the shapes of the lower-center irradiation region 21, the upper-center irradiation region 22, the lower-left small irradiation region 23, the upper-left small irradiation region 24, the lower-right small irradiation region 25 and the upper-right small irradiation region 26, respectively.

### [Outer Lens]

An outer lens 47 is disposed in front FF of the lower-center inner lenses 41, the upper-center inner lenses 42, the lower-left inner lens 43, the upper-left inner lens 44, the lower-right inner lens 45 and the upper-right inner lens 46, as illustrated in FIG. 4. Light from the lower-center inner lenses 41, the upper-center inner lenses 42, the lower-left inner lens 43, the upper-left inner lens 44, the lower-right inner lens 45 and the upper-right inner lens 46 is incident on the outer lens 47. The outer lens 47 causes light incident thereon to be emitted to the front FF. By this means, the lower-center irradiation region 21, the upper-center irradiation region 22, the lower-left small irradiation region 23, the upper-left small irradiation region 24, the lower-right small irradiation region 25 and the upper-right small irradiation region 26 are formed in front F of the leaning vehicle 1.

### [Irradiation Region]

Next, the irradiation region 200 of the headlight unit 10 is described referring to FIG. 1.

The irradiation region 200 is formed by light radiated to at least one of the lower-center irradiation region 21, the upper-center irradiation region 22, the lower-left small irradiation region 23, the upper-left small irradiation region 24, the lower-right small irradiation region 25 and the upper-right small irradiation region 26. Hereinafter, a state in which light is radiated to all of the lower-center irradiation region 21, the upper-center irradiation region 22, the lower-left small irradiation region 23, the upper-left small irradiation region 24, the lower-right small irradiation region 25 and the upper-right small irradiation region 26 as illustrated in FIG. 1 is defined as an "entire-small-irradiation-region irradiation state". Further, the lower-center irradiation region 21, the upper-center irradiation region 22, the lower-left small irradiation region 23, the upper-left small irradiation region 24, the lower-right small irradiation region 25 and the upper-right small irradiation region 26 are collectively referred to as "small irradiation regions", in some cases.

The lower-center irradiation region 21 forms a rectangular shape having a long side that extends in the left-right direction FLR, and a short side that extends in the up-down direction FUD. The lower-center irradiation region 21 has a top-end-passing straight line CL that extends in the left-right direction FLR at the top end thereof (upper FU long side). Hereinafter, the top-end-passing straight line CL when in a state in which the vehicle body 6 is upright is defined as "reference top-end-passing straight line H-H". Further, a straight line extending in the front-back direction FFB at the center of the upper FU long side of the lower-center irradiation region 21 is defined as a central axis X of the irradiation region 200 in the entire-small-irradiation-region irradiation state. A straight line that intersects with the central axis X of the headlight unit 10 and extends in the up-down direction UD is defined as an "imaginary vertical line V-V". The top-end-passing straight line CL inclines to the left L or the right when the vehicle body 6 leans in the leftward direction L or the rightward direction R. On the other hand, the reference top-end-passing straight line H-H does not incline to the left L or the right R even if the vehicle body 6 leans in the leftward direction L or the rightward direction R. The imaginary vertical line V-V also does not incline to the left L or the right R even if the vehicle body 6 leans in the leftward direction L or the rightward direction R. When in a state in which the vehicle body 6 is upright, the lower-center irradiation region 21 is disposed below D the reference top-end-passing straight line H-H.

The upper-center irradiation region 22 forms a rectangular shape having a long side that extends in the left-right direction FLR and a short side that extends in the up-down direction FUD. The length of the lower-center irradiation region 21 in the left-right direction FLR is longer than the length of the upper-center irradiation region 22 in the left-right direction FLR. In addition, the length of the lower-center irradiation region 21 in the up-down direction FUD is longer than the length of the upper-center irradiation region 22 in the up-down direction FUD. This is because the lower-center irradiation region 21 required for a low beam is wider than the upper-center irradiation region 22 required for a high beam.

The upper-center irradiation region 22 is disposed above FU the lower-center irradiation region 21. That is, the upper-center irradiation region 22 corresponds to an irradiation region of a high beam. However, when in a state in which the vehicle body 6 is upright, the upper-center irradiation region 22 protrudes below D the reference top-end-passing straight line H-H. Accordingly, the bottom end portion of the upper-center irradiation region 22 overlaps with the top end portion of the lower-center irradiation region 21.

The lower-left small irradiation region 23 forms a belt shape that extends rectilinearly in the lower-left direction FLD from the central axis X. However, the top right end portion of the lower-left small irradiation region 23 is disposed to the lower-left FLD of the central axis X, and does not overlap with the central axis X when viewed from the front FF. Further, the width of the lower-left small irradiation region 23 widens as the distance from the central axis X increases. In this specification, the term "width" with respect to the lower-left small irradiation region 23, the upper-left small irradiation region 24, the lower-right small irradiation region 25 and the upper-right small irradiation region 26 refers to the dimension of each of the lower-left small irradiation region 23, the upper-left small irradiation region 24, the lower-right small irradiation region 25 and the upper-right small irradiation region 26 in a direction perpendicular to the direction in which the lower-left small irradiation region 23, the upper-left small irradiation region 24, the lower-right small irradiation region 25 and the upper-right small irradiation region 26 extend, respectively. Further, the term "direction in which the lower-left small irradiation region 23, the upper-left small irradiation region 24, the lower-right small irradiation region 25 and the upper-right small irradiation region 26 extend" refers to a direction in which a center line in the width direction of the lower-left small irradiation region 23, the upper-left small irradiation region 24, the lower-right small irradiation region 25 and the upper-right small irradiation region 26 extends, respectively.

The lower-left small irradiation region 23 is disposed to the left FL of the lower-center irradiation region 21. However, the top right end portion of the lower-left small irradiation region 23 overlaps with the lower-center irradiation region 21. In addition, the lower-left small irradiation region 23 is disposed below FD the reference top-end-passing straight line H-H. The lower-left small irradiation region 23 does not contact the reference top-end-passing straight line H-H.

The upper-left small irradiation region 24 forms a belt shape that extends rectilinearly in the upper-left direction FLU from the central axis X. However, the bottom right end portion of the upper-left small irradiation region 24 is disposed to the upper-left FLU of the central axis X, and does not overlap with the central axis X when viewed from the front FF. Further, the width of the upper-left small irradiation region 24 widens as the distance from the central axis X increases.

The upper-left small irradiation region 24 is disposed to the left FL of the upper-center irradiation region 22. However, the bottom right end portion of the upper-left small irradiation region 24 overlaps with the upper-center irradiation region 22. In addition, the upper-left small irradiation region 24 is disposed above FU the reference top-end-passing straight line H-H. However, the upper-left small irradiation region 24 protrudes downward FD from the reference top-end-passing straight line H-H. As a result, the bottom end portion of the upper-left small irradiation region 24 and the top end portion of the lower-left small irradiation region 23 overlap.

The lower-right small irradiation region 25 forms a belt shape that extends rectilinearly in the lower-right direction FRD of the central axis X. However, the top left end portion of the lower-right small irradiation region 25 is disposed in the lower-right FRD of the central axis X, and does not overlap with the central axis X when viewed from the front FF. Further, the width of the lower-right small irradiation region 25 widens as the distance from the central axis X increases.

The lower-right small irradiation region 25 is disposed to the right FR of the lower-center irradiation region 21. However, the top left end portion of the lower-right small irradiation region 25 overlaps with the lower-center irradiation region 21. In addition, the lower-right small irradiation region 25 is disposed below FD the reference top-end-passing straight line H-H. The lower-right small irradiation region 25 does not contact the reference top-end-passing straight line H-H. Further, the lower-right small irradiation region 25 is disposed in linear symmetry with the lower-left small irradiation region 23 with respect to the imaginary vertical line V-V.

The upper-right small irradiation region 26 forms a belt shape that extends rectilinearly in the upper-right direction FRU of the central axis X. However, the bottom left end portion of the upper-right small irradiation region 26 is disposed in the upper right FRU of the central axis X, and does not overlap with the central axis X when viewed from the front FF. Further, the width of the upper-right small irradiation region 26 widens as the distance from the central axis X increases.

The upper-right small irradiation region 26 is disposed to the right FR of the lower-center irradiation region 21. However, the bottom left end portion of the upper-right small irradiation region 26 overlaps with the upper-center irradiation region 22. In addition, the upper-right small irradiation region 26 is disposed above FU the reference top-end-passing straight line H-H. However, the upper-right small irradiation region 26 protrudes downward FD from the reference top-end-passing straight line H-H. As a result, the bottom end portion of the upper-right small irradiation region 26 and the top end portion of the lower-right small irradiation region 25 overlap. Further, the upper-right small irradiation region 26 is disposed in linear symmetry with the upper-left small irradiation region 24 with respect to the imaginary vertical line V-V.

### [Control Device]

Next, the control device 9 will be described with reference to the accompanying drawings. In a case where the vehicle body 6 leans in either the leftward direction L or the rightward direction R in the entire-small-irradiation-region irradiation state, the control device 9 performs control to place at least one of the lower-left small irradiation region 23, the upper-left small irradiation region 24, the lower-right small irradiation region 25 and the upper-right small irradiation region 26 for which the necessity is low into a dimmed state or a non-irradiation state without an operation being performed by the rider. By this means, the irradiation region 200 can be formed to correspond with various travelling environments, and the degree of design freedom of the irradiation region 200 of the headlight unit 10 can be increased. In order to realize such control, the leaning vehicle 1 includes the control device 9 that is described hereunder.

As illustrated in FIG. 1, the control device 9 includes a control board 30. The lower-center light emitting diodes 11, the upper-center light emitting diodes 12, the lower-left light emitting diode 13, the upper-left light emitting diode 14, the lower-right light emitting diode 15 and the upper-right light emitting diode 16 are mounted on the control board 30. When the headlight unit 10 is attached to the leaning vehicle 1, the control board 30 is connected to an unshown power supply. By this means, electric power is supplied from the power supply to the lower-center light emitting diodes 11, the upper-center light emitting diodes 12, the lower-left light emitting diode 13, the upper-left light emitting diode 14, the lower-right light emitting diode 15 and the upper-right light emitting diode 16.

Further, as illustrated in FIG. 1, the control device 9 includes an ECU (electronic control unit) 50 and a controller 51.

The ECU 50 includes a microcomputer. The ECU 50 may be constituted by the control board 30 and an IC (integrated circuit) that is mounted on the control board 30, or may be constituted by a control board that is different from the control board 30, and an IC. The ECU 50 is connected to the photodetector camera 54 (see FIG. 2).

The photodetector camera 54 will now be described. As illustrated in FIG. 2, the photodetector camera 54 is attached to the vehicle body 6. Therefore, the photodetector camera 54 leans in the leftward direction L or the rightward direction R together with the vehicle body 6. Further, the photodetector camera 54 detects light that a preceding vehicle or an oncoming vehicle emits by photographing the area in the front F of the leaning vehicle 1. For this reason, the photodetector camera 54 includes a light receiving element. The light receiving element is, for example, a CCD (charge coupled device) or a CMOS (complementary metal oxide semiconductor). Light that a preceding vehicle emits is, for example, light of a tail light of the preceding vehicle. Light that an oncoming vehicle emits is, for example, light of a headlight of the oncoming vehicle. The photodetector camera 54 outputs a video signal to the ECU 50.

The description will now return to the description of the ECU 50. The ECU 50 calculates the leaning angle θ of the vehicle body 6 based on a video signal that is output thereto from the photodetector camera 54. The ECU 50, for example, calculates the leaning angle θ of the vehicle body 6 based on an inclination of a white line on the road surface. In addition, the ECU 50 calculates the position of a preceding vehicle or an oncoming vehicle based on the calculated leaning angle θ of the vehicle body 6 and the video signal that is output thereto from the photodetector camera 54. The ECU 50 outputs information regarding the leaning angle θ (hereunder, referred to as "leaning angle information") and information regarding the position of a preceding vehicle or an oncoming vehicle (hereunder, referred to as "positional information regarding a preceding vehicle and the like") to the controller 51. In the present embodiment, the positional information regarding a preceding vehicle and the like is information indicating the presence or absence of a preceding vehicle or an oncoming vehicle.

The controller 51 includes a control IC for controlling the headlight unit 10. The controller 51 may be constituted by the control board 30 and a control IC that is mounted on the control board 30, or may be constituted by a control board that is different from the control board 30, and a control IC. The controller 51 controls the irradiation region 200 of the headlight unit 10 based on the leaning angle information and the positional information regarding a preceding vehicle and the like. Specifically, the controller 51 includes a memory 55. The memory 55 stores an irradiation region determination table (described in detail later) that shows the relation between the irradiation region 200 and the leaning angle information and positional information regarding a preceding vehicle and the like. The controller 51 is connected to the headlight unit 10. The controller 51 outputs a control signal to the headlight unit 10 in order to form the irradiation region 200 that has been determined using the irradiation region determination table. The control board 30 includes an unshown power supply circuit. Based on a control signal from the controller 51, the power supply circuit controls an electric current that flows to the lower-center light emitting diodes 11, the upper-center light emitting diodes 12, the lower-left light emitting diode 13, the upper-left light emitting diode 14, the lower-right light emitting diode 15 and the upper-right light emitting diode 16. By this means, the headlight unit 10 can form the irradiation region 200 that corresponds with various travelling environments.

### [Irradiation region when leaning]

When the leaning vehicle 1 turns, the vehicle body 6 leans in the turning direction. Because the headlight unit 10 is fixed to the vehicle body 6, the headlight unit 10 also leans when the vehicle body 6 leans. By this means, the irradiation region 200 of the headlight unit 10 also leans. Hereunder, the irradiation region 200 of the headlight unit 10 in a case where the vehicle body 6 leans in the leftward direction L will be described.

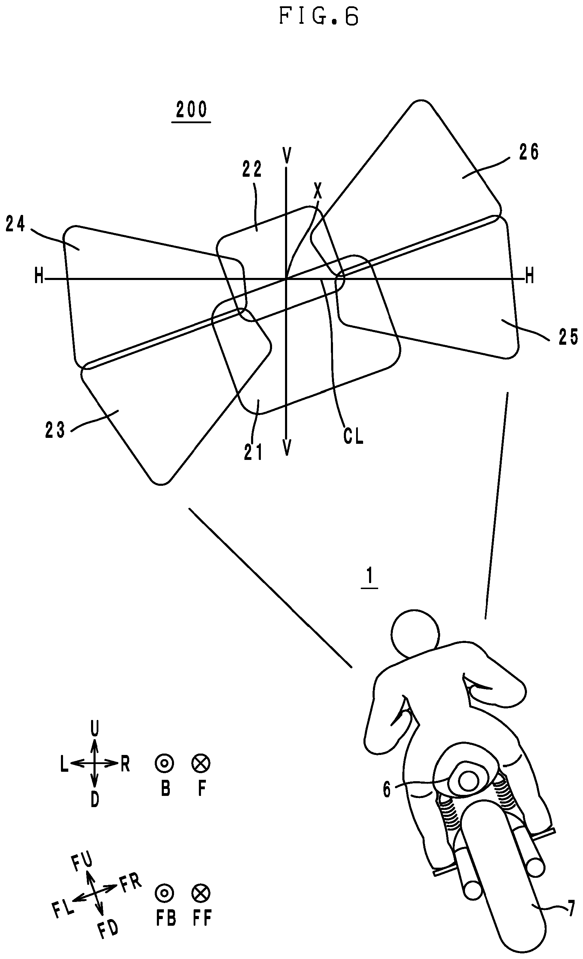

FIG. 6 is a view that illustrates the irradiation region 200 in a case where the vehicle body 6 leans in the leftward direction L. In FIG. 6, the irradiation region 200 is in the entire-small-irradiation-region irradiation state. The controller 51 performs dimming/non-irradiation control, described hereunder, based on the leaning angle information and the positional information regarding a preceding vehicle and the like.

### [Lower-left small irradiation region when turning left]

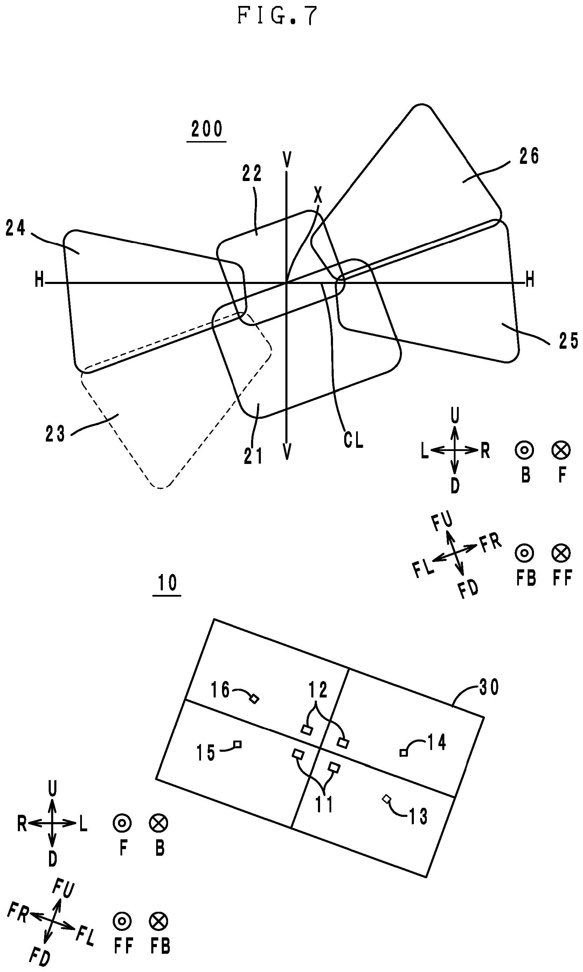

FIG. 7 is a view illustrating the irradiation region 200 in a case where the vehicle body 6 leans in the leftward direction L. In FIG. 7, a fact that the lower-left small irradiation region 23 is in a non-irradiation state is indicated by showing the lower-left small irradiation region 23 by means of a dashed line.

As illustrated in FIG. 7, when the vehicle body 6 leans in the leftward direction L, the leaning angle θ takes a positive value. At this time, the lower-left light emitting diode 13 approaches the road surface. Therefore, the lower-left small irradiation region 23 which is formed by light that the lower-left light emitting diode 13 radiates is illuminated more brightly compared to the surrounding area. Accordingly, when the leaning vehicle 1 is turning left, it is desirable for the amount of light that is radiated to the lower-left small irradiation region 23 by the lower-left light emitting diode 13 to be reduced.

Therefore, in a case where the leaning angle θ is a positive value, the controller 51 executes lower-left small irradiation region dimming/non-irradiation control which controls so that the lower-left small irradiation region 23 enters a dimmed state in which the amount of light that is radiated to the lower-left small irradiation region 23 by the lower-left light emitting diode 13 is decreased relative to the amount of light that is radiated to the lower-left small irradiation region 23 by the lower-left light emitting diode 13 in the entire-small-irradiation-region irradiation state, or enters a non-irradiation state in which light is not radiated to the lower-left small irradiation region 23 by the lower-left light emitting diode 13. When executing the lower-left small irradiation region dimming/non-irradiation control, the controller 51 controls the lower-left light emitting diode 13 so as to enter a dimmed state or an extinguished state from a lit state. Specifically, when controlling the lower-left light emitting diode 13 to enter a dimmed state from a lit state, the controller 51 makes the electric current flowing to the lower-left light emitting diode 13 less than the electric current that flows to the lower-left light emitting diode 13 in the entire-small-irradiation-region irradiation state. The memory 55 stores the value of the electric current that flows to the lower-left light emitting diode 13. Further, when controlling the lower-left light emitting diode 13 to enter an extinguished state from a lit state, the controller 51 does not allow electric current to flow to the lower-left light emitting diode 13.

### [Upper-left small irradiation region when turning left]

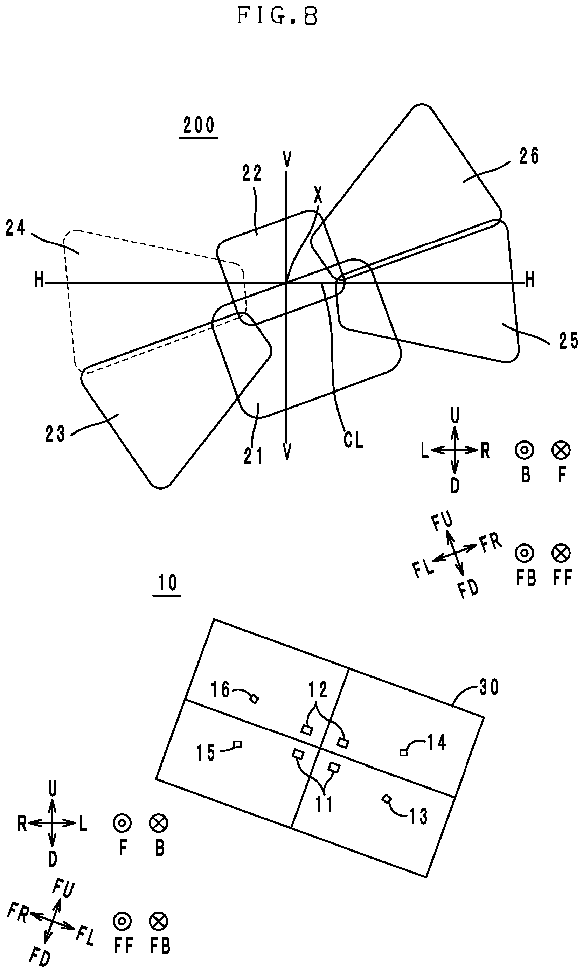

FIG. 8 is a view illustrating the irradiation region 200 in a case where the vehicle body 6 leans in the leftward direction L. In FIG. 8, a fact that the upper-left small irradiation region 24 is in a non-irradiation state is indicated by showing the upper-left small irradiation region 24 by means of a dashed line.

As illustrated in FIG. 8, a part of the upper-left small irradiation region 24 is located further downward D than the reference top-end-passing straight line H-H. The remaining portion of the upper-left small irradiation region 24 is located further upward U than the reference top-end-passing straight line H-H. When the leaning vehicle 1 is turning left, the line of sight of the rider is directed in the left-front direction LF. The portion of the upper-left small irradiation region 24 which is the remaining portion that is located further upward U than the reference top-end-passing straight line H-H illuminates the same direction as the direction of the line of sight of the rider. Therefore, when the leaning vehicle 1 is turning left, the portion of the upper-left small irradiation region 24 which is the portion located further upward U than the reference top-end-passing straight line H-H is made wider than the field of view of the rider.

However, in a case where a preceding vehicle or an oncoming vehicle is present, the portion of the upper-left small irradiation region 24 which is the portion located further upward U than the reference top-end-passing straight line H-H may sometimes impart a sensation of discomfort that is caused by a glare to the driver of the preceding vehicle or oncoming vehicle. Therefore, when the leaning vehicle 1 is turning left, in a case where a preceding vehicle or an oncoming vehicle is present, it is desirable for the amount of light radiated to the upper-left small irradiation region 24 by the upper-left light emitting diode 14 to be reduced.

Therefore, in a case where the leaning angle θ is a positive value, when the photodetector camera 54 does not detect at least one of a preceding vehicle and an oncoming vehicle, the controller 51 does not execute the upper-left small irradiation region dimming/non-irradiation control that controls so that the upper-left small irradiation region 24 enters a dimmed state in which the amount of light that is radiated to the upper-left small irradiation region 24 by the upper-left light emitting diode 14 is decreased relative to the amount of light that is radiated to the upper-left small irradiation region 24 by the upper-left light emitting diode 14 in the entire-small-irradiation-region irradiation state, or enters a non-irradiation state in which light is not radiated to the upper-left small irradiation region 24 by the upper-left light emitting diode 14. On the other hand, even in a case where the leaning angle θ is a positive value, when the photodetector camera 54 detects a preceding vehicle or an oncoming vehicle, the controller 51 executes the upper-left small irradiation region dimming/non-irradiation control as illustrated in FIG. 8. In a case of executing the upper-left small irradiation region dimming/non-irradiation control, the controller 51 controls the upper-left light emitting diode 14 so as to enter a dimmed state or an extinguished state from a lit state. Specifically, in a case where the controller 51 controls the upper-left light emitting diode 14 so as to enter the dimmed state from the lit state, the controller 51 makes the electric current flowing to the upper-left light emitting diode 14 less than the electric current that flows to the upper-left light emitting diode 14 in the entire-small-irradiation-region irradiation state. The memory 55 stores the value of the electric current that flows to the upper-left light emitting diode 14. Further, when controlling the upper-left light emitting diode 14 so as to enter the extinguished state from the lit state, the controller 51 does not allow electric current to flow to the upper-left light emitting diode 14.

### [Lower-right small irradiation region when turning left]

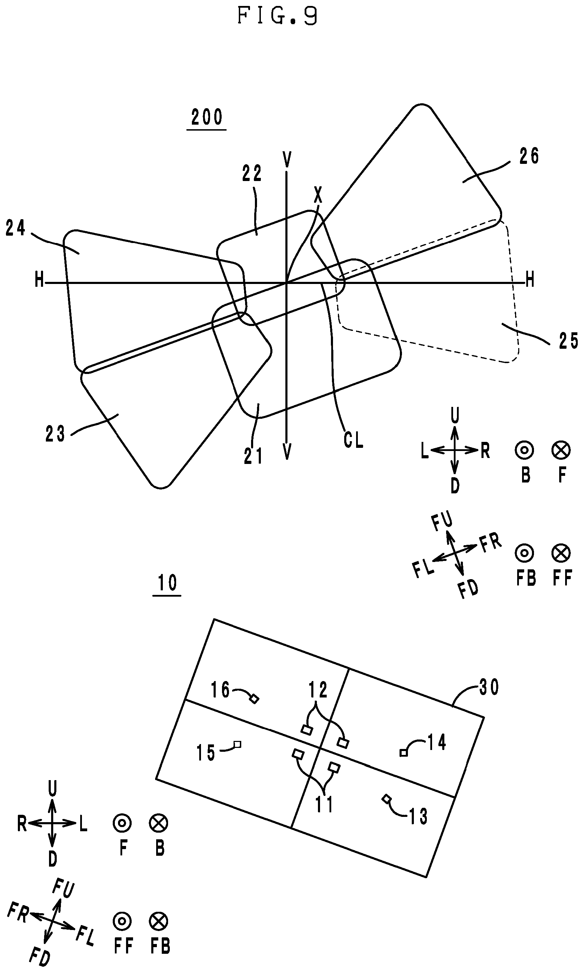

FIG. 9 is a view illustrating the irradiation region 200 in a case where the vehicle body 6 leans in the leftward direction L. In FIG. 9, a fact that the lower-right small irradiation region 25 is in a non-irradiation state is indicated by showing the lower-right small irradiation region 25 by means of a dashed line.

As illustrated in FIG. 9, a part of the lower-right small irradiation region 25 is located further downward D than the reference top-end-passing straight line H-H. The remaining portion of the lower-right small irradiation region 25 is located further upward U than the reference top-end-passing straight line H-H. In a case where a preceding vehicle or an oncoming vehicle is present, the portion of the lower-right small irradiation region 25 which is the portion located further upward U than the reference top-end-passing straight line H-H may sometimes impart a sensation of discomfort that is caused by a glare to the driver of the preceding vehicle or oncoming vehicle. Further, when the leaning vehicle 1 is turning left, the line of sight of the rider is directed in the left-front direction LF. Therefore, the lower-right small irradiation region 25 is away from the line of sight of the rider. Accordingly, when the leaning vehicle 1 is turning left, irrespective of the presence or absence of a preceding vehicle or an oncoming vehicle, it is desirable for the amount of light radiated to the lower-right small irradiation region 25 by the lower-right light emitting diode 15 to be reduced.

Therefore, in a case where the leaning angle θ is a positive value, irrespective of whether or not the photodetector camera 54 has detected a preceding vehicle or an oncoming vehicle, as illustrated in FIG. 9, the controller 51 executes lower-right small irradiation region dimming/non-irradiation control that controls so that the lower-right small irradiation region 25 enters a dimmed state in which the amount of light that is radiated to the lower-right small irradiation region 25 by the lower-right light emitting diode 15 is decreased relative to the amount of light that is radiated to the lower-right small irradiation region 25 by the lower-right light emitting diode 15 in the entire-small-irradiation-region irradiation state, or enters a non-irradiation state in which light is not radiated to the lower-right small irradiation region 25 by the lower-right light emitting diode 15. **In** the case of executing the lower-right small irradiation region dimming/non-irradiation control, the controller 51 controls the lower-right light emitting diode 15 so as to enter a dimmed state or an extinguished state from a lit state. Specifically, in a case where the controller 51 controls the lower-right light emitting diode 15 so as to enter the dimmed state from the lit state, the controller 51 makes the electric current flowing to the lower-right light emitting diode 15 less than the electric current that flows to the lower-right light emitting diode 15 in the entire-small-irradiation-region irradiation state. The memory 55 stores the value of the electric current that flows to the lower-right light emitting diode 15. When controlling the lower-right light emitting diode 15 to enter the extinguished state from the lit state, the controller 51 does not allow electric current to flow to the lower-right light emitting diode 15.

### [Upper-right small irradiation region when turning left]

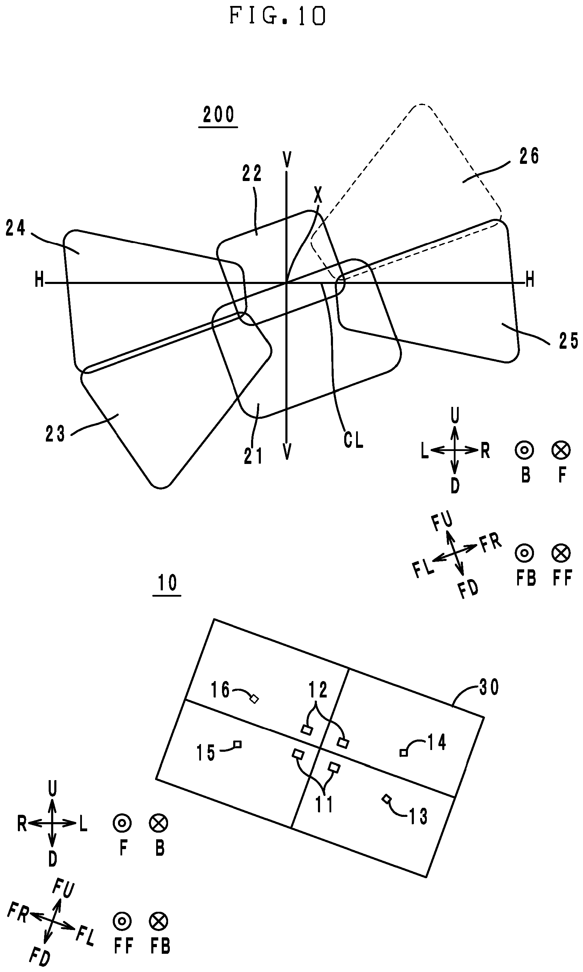

FIG. 10 is a view illustrating the irradiation region 200 in a case where the vehicle body 6 leans in the leftward direction L. **In** FIG. 10, a fact that the upper-right small irradiation region 26 is in a non-irradiation state is indicated by showing the upper-right small irradiation region 26 by means of a dashed line.

As illustrated in FIG. 10, the upper-right small irradiation region 26 is located further upward U than the reference top-end-passing straight line **H-H. In** a case where a preceding vehicle or an oncoming vehicle is present, a portion of the upper-right small irradiation region 26 which is a portion located further upward U than the reference top-end-passing straight line **H-H** may sometimes impart a sensation of discomfort that is caused by a glare to the driver of the preceding vehicle or oncoming vehicle. Further, when the leaning vehicle 1 is turning left, the line of sight of the rider is directed in the left-front direction LF. Therefore, the upper-right small irradiation region 26 is away from the line of sight of the rider. Accordingly, when the leaning vehicle 1 is turning left, irrespective of the presence or absence of a preceding vehicle or an oncoming vehicle, it is desirable for the amount of light radiated to the upper-right small irradiation region 26 by the upper-right light emitting diode 16 to be reduced.

Therefore, in a case where the leaning angle θ is a positive value, irrespective of whether or not the photodetector camera 54 has detected a preceding vehicle or an oncoming vehicle, as illustrated in FIG. 10, the controller 51 executes upper-right small irradiation region dimming/non-irradiation control that controls so that the upper-right small irradiation region 26 enters a dimmed state in which the amount of light that is radiated to the upper-right small irradiation region 26 by the upper-right light emitting diode 16 is decreased relative to the amount of light that is radiated to the upper-right small irradiation region 26 by the upper-right light emitting diode 16 in the entire-small-irradiation-region irradiation state, or enters a non-irradiation state in which light is not radiated to the upper-right small irradiation region 26 by the upper-right light emitting diode 16. In the case of executing the upper-right small irradiation region dimming/non-irradiation control, the controller 51 controls the upper-right light emitting diode 16 so as to enter a dimmed state or an extinguished state from a lit state. Specifically, in a case where the controller 51 controls the upper-right light emitting diode 16 so as to enter the dimmed state from the lit state, the controller 51 makes the electric current flowing to the upper-right light emitting diode 16 less than the electric current that flows to the upper-right light emitting diode 16 in the entire-small-irradiation-region irradiation state. The memory 55 stores the value of the electric current that flows to the upper-right light emitting diode 16. When controlling the upper-right light emitting diode 16 to enter the extinguished state from the lit state, the controller 51 does not allow electric current to flow to the upper-right light emitting diode 16.

### [Lower-center irradiation region, upper-center irradiation region, lower-left small irradiation region, upper-left small irradiation region, lower-right small irradiation region and upper-right small irradiation region when turning right]

The lower-center irradiation region 21, the upper-center irradiation region 22, the lower-left small irradiation region 23, the upper-left small irradiation region 24, the lower-right small irradiation region 25 and the upper-right small irradiation region 26 when turning right are axisymmetric about the imaginary vertical line V-V with respect to the lower-center irradiation region 21, the upper-center irradiation region 22, the lower-left small irradiation region 23, the upper-left small irradiation region 24, the lower-right small irradiation region 25 and the upper-right small irradiation region 26 when turning left, respectively. Hence, a description of the lower-center irradiation region 21, the upper-center irradiation region 22, the lower-left small irradiation region 23, the upper-left small irradiation region 24, the lower-right small irradiation region 25 and the upper-right small irradiation region 26 when turning right is omitted here.

### [Irradiation region determination table]

Next, the irradiation region determination table will be described. The memory 55 stores the irradiation region determination table shown in Table 1 so that the controller 51 can execute the lower-left small irradiation region dimming/non-irradiation control, the upper-left small irradiation region dimming/non-irradiation control, the lower-right small irradiation region dimming/non-irradiation control and the upper-right small irradiation region dimming/non-irradiation control. The irradiation region determination table shown in Table 1 shows the relation between the irradiation region 200 and the leaning angle information and positional information regarding a preceding vehicle and the like.

### [Table 1]

**TABLE. 1**

| | No Preceding Vehicle or the Like | There is Preceding Vehicle or the Like |
|---|---|---|
| *θ*>0 Leaning in Leftward Direction L | 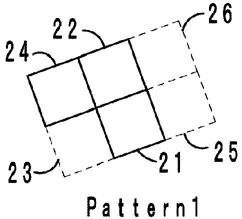 | 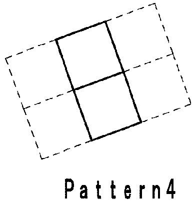 |
| *θ*=0 Upright | 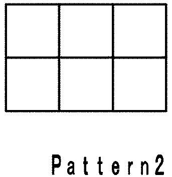 | 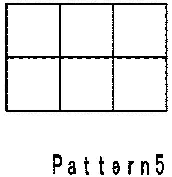 |
| *θ*<0 Leaning in Rightward Direction R | 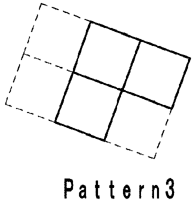 | 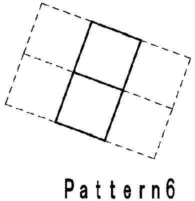 |

### [Controller Operations]

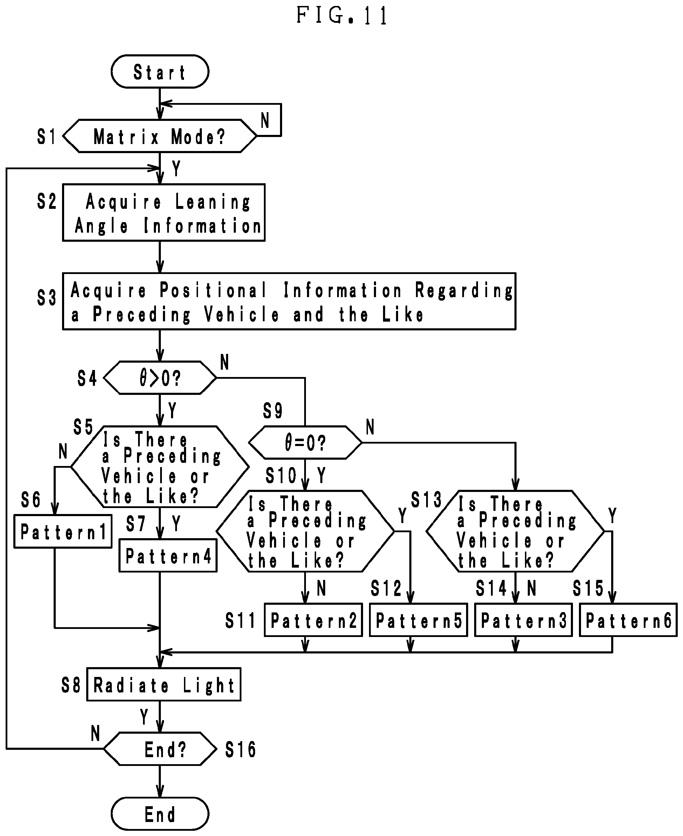

Next, the operations of the controller 51 will be described with reference to the accompanying drawings. FIG. 11 is a view illustrating the irradiation region determination table in Table 1 by means of a flowchart. The controller 51 executes the operations illustrated in FIG. 11 in accordance with, for example, a program that the memory 55 stores.

First, a normal mode and a matrix mode will be described. The normal mode and the matrix mode are control modes for the headlight unit 10. The normal mode includes a low-beam mode and a high-beam mode. In the low-beam mode, the controller 51 controls the headlight unit 10 so as to enter a state in which light is radiated to only the lower-center irradiation region 21. In the high-beam mode, the controller 51 controls the headlight unit 10 so that light is radiated to only the lower-center irradiation region 21 and the upper-center irradiation region 22. In the normal mode, even if the vehicle body 6 leans in the leftward direction L or the rightward direction R, the controller 51 controls the headlight unit 10 so that light is radiated to only the lower-center irradiation region 21 or so that light is radiated to only the lower-center irradiation region 21 and the upper-center irradiation region 22.

On the other hand, in the matrix mode, when the vehicle body 6 is in an upright state, the controller 51 controls the headlight unit 10 so that the irradiation region 200 enters the entire-small-irradiation-region irradiation state. In the matrix mode, when the vehicle body 6 leans in the leftward direction L or the rightward direction R, in accordance with the irradiation region determination table shown in Table 1, the controller 51 performs control of the headlight unit 10 so that at least one of the following operations (a) to (d) is executed:
(a) Light is not radiated to the lower-left small irradiation region 23 by the lower-left light emitting diode 13.
(b) Light is not radiated to the upper-left small irradiation region 24 by the upper-left light emitting diode 14.
(c) Light is not radiated to the lower-right small irradiation region 25 by the lower-right light emitting diode 15.
(d) Light is not radiated to the upper-right small irradiation region 26 by the upper-right light emitting diode 16.

Further, in the following description, (a) to (d) described above are executed when the controller 51 executes the lower-left small irradiation region dimming/non-irradiation control, the upper-left small irradiation region dimming/non-irradiation control, the lower-right small irradiation region dimming/non-irradiation control and the upper-right small irradiation region dimming/non-irradiation control. However, when the controller 51 executes the lower-left small irradiation region dimming/non-irradiation control, the upper-left small irradiation region dimming/non-irradiation control, the lower-right small irradiation region dimming/non-irradiation control and the upper-right small irradiation region dimming/non-irradiation control, the lower-left light emitting diode 13, the upper-left light emitting diode 14, the lower-right light emitting diode 15 and the upper-right light emitting diode 16 may reduce the light that is radiated to the lower-left small irradiation region 23, the upper-left small irradiation region 24, the lower-right small irradiation region 25 and the upper-right small irradiation region 26, respectively.

The present processing is started when a switch of the headlight unit 10 of the leaning vehicle 1 is switched on. The controller 51 determines whether or not the control mode of the headlight unit 10 is the matrix mode (step S1). If the control mode is the matrix mode, the present processing proceeds to step S2. If the control mode is not the matrix mode (when the control mode is the normal mode), the present processing returns to step S1. In this case, the present processing repeats step S1 until the control mode of the headlight unit 10 becomes the matrix mode.

When the control mode of the headlight unit 10 is the matrix mode, the controller 51 acquires the leaning angle information from the ECU 50 (step S2). In addition, the controller 51 acquires the positional information regarding a preceding vehicle and the like from the ECU 50 (step S3).

Next, based on the leaning angle information, the controller 51 determines whether or not the leaning angle θ is a positive value (step S4). If the leaning angle θ is a positive value, the present processing proceeds to step S5. If the leaning angle θ is not a positive value, the present processing proceeds to step S9.

In a case where the leaning angle θ is a positive value, based on the positional information regarding a preceding vehicle and the like, the controller 51 determines whether or not a preceding vehicle or an oncoming vehicle is present ( step S5). If at least one of a preceding vehicle and an oncoming vehicle are not present, the present processing proceeds to step S6. If a preceding vehicle or an oncoming vehicle is present, the present processing proceeds to step S7.

If a preceding vehicle is not present, the controller 51 determines pattern 1 in Table 1 as the pattern to be adopted for the irradiation region 200 (step S6). Thereafter, the present processing proceeds to step S8.

If a preceding vehicle is present, the controller 51 determines that the irradiation region 200 according to pattern 4 in Table 1 is to be adopted as the irradiation region 200 (step S7). Thereafter, the present processing proceeds to step S8.

In step S4, if the leaning angle θ is not a positive value, the controller 51 determines whether or not the leaning angle θ is 0 (step S9). If the leaning angle θ is 0, the present processing proceeds to step S10. If the leaning angle θ is not 0 (that is, in a case where the leaning angle θ is a negative value), the present processing proceeds to step S13.

If the leaning angle θ is 0, based on the positional information regarding a preceding vehicle and the like, the controller 51 determines whether or not a preceding vehicle or an oncoming vehicle is present (step S10). If at least one of a preceding vehicle and an oncoming vehicle are not present, the present processing proceeds to step S11. If a preceding vehicle or an oncoming vehicle is present, the present processing proceeds to step S12.

If a preceding vehicle is not present, the controller 51 determines pattern 2 in Table 1 as the pattern to be adopted for the irradiation region 200 (step S11). Thereafter, the present processing proceeds to step S8.

If a preceding vehicle is present, the controller 51 determines that the irradiation region 200 according to pattern 5 in Table 1 is to be adopted as the irradiation region 200 (step S12). Thereafter, the present processing proceeds to step S8.

In step S9, if the leaning angle θ is not 0, based on the positional information regarding a preceding vehicle and the like, the controller 51 determines whether or not a preceding vehicle or an oncoming vehicle is present (step S13). If at least one of a preceding vehicle and an oncoming vehicle are not present, the present processing proceeds to step S14. If a preceding vehicle or an oncoming vehicle is present, the present processing proceeds to step S15.

If a preceding vehicle is not present, the controller 51 determines pattern 3 in Table 1 as the pattern to be adopted for the irradiation region 200 (step S14). Thereafter, the present processing proceeds to step S8.

If a preceding vehicle is present, the controller 51 determines that the irradiation region 200 according to pattern 6 in Table 1 is to be adopted as the irradiation region 200 (step S15). Thereafter, the present processing proceeds to step S8.

In the aforementioned step S8, the controller 51 causes the headlight unit 10 to radiate light based on the irradiation region 200 that has been determined in step S6, S7, S11, S12, S14 or S15 (step S8). At such time, in a case where the vehicle body 6 leans in the leftward direction L or the rightward direction R (in the case of pattern 1, 3, 4, or 6), the controller 51 controls the headlight unit 10 so that at least one of the aforementioned (a) to (d) is executed.

Next, by determining whether or not the matrix mode has ended, the controller 51 determines whether or not to end the present processing (step S16). If the matrix mode has ended, the controller 51 ends the present processing. If the matrix mode has not ended, the present processing returns to step S2. Here, the description of the operations of the controller 51 ends.

Note that the controller 51 may determine the irradiation region 200 based on the leaning angle information and the positional information regarding a preceding vehicle and the like using the irradiation region determination table shown in Table 1 and without using the flowchart shown in FIG. 11.

### [Effects]

According to the leaning-vehicle headlight apparatus 8, a wide area in the front F of the leaning vehicle 1 can be illuminated. In addition to the lower-center irradiation region 21 and the upper-center irradiation region 22, the leaning-vehicle headlight apparatus 8 can also form the lower-left small irradiation region 23, the upper-left small irradiation region 24, the lower-right small irradiation region 25 and the upper-right small irradiation region 26. Therefore, the headlight unit 10 can illuminate a wide area in the front F of the leaning vehicle 1.

Further, according to the leaning-vehicle headlight apparatus 8 of the present embodiment, the degree of design freedom with respect to the irradiation region 200 of the headlight unit 10 when the vehicle body 6 is in a leaning state can be increased. More specifically, according to the leaning-vehicle headlight apparatus 8, in a case where the vehicle body 6 leans in either the vehicle-body 6 leftward direction L or the vehicle-body 6 rightward direction R in the entire-small-irradiation-region irradiation state, the controller 51 executes at least one of the lower-left small irradiation region dimming/non-irradiation control, the lower-right small irradiation region dimming/non-irradiation control, the upper-left small irradiation region dimming/non-irradiation control and the upper-right small irradiation region dimming/non-irradiation control without an operation being performed by the rider. According to the lower-left small irradiation region dimming/non-irradiation control, the controller 51 controls so that the lower-left small irradiation region 23 enters a dimmed state in which the amount of light that is radiated to the lower-left small irradiation region 23 by the lower-left light emitting diode 13 is decreased relative to the amount of light that is radiated to the lower-left small irradiation region 23 by the lower-left light emitting diode 13 in the entire-small-irradiation-region irradiation state, or enters a non-irradiation state in which light is not radiated to the lower-left small irradiation region 23 by the lower-left light emitting diode 13. According to the lower-right small irradiation region dimming/non-irradiation control, the controller 51 controls so that the lower-right small irradiation region 25 enters a dimmed state in which the amount of light that is radiated to the lower-right small irradiation region 25 by the lower-right light emitting diode 15 is decreased relative to the amount of light that is radiated to the lower-right small irradiation region 25 by the lower-right light emitting diode 15 in the entire-small-irradiation-region irradiation state, or enters a non-irradiation state in which light is not radiated to the lower-right small irradiation region 25. According to the upper-left small irradiation region dimming/non-irradiation control, the controller 51 controls so that the upper-left small irradiation region 24 enters a dimmed state in which the amount of light that is radiated to the upper-left small irradiation region 24 by the upper-left light emitting diode 14 is decreased relative to the amount of light that is radiated to the upper-left small irradiation region 24 by the upper-left light emitting diode 14 in the entire-small-irradiation-region irradiation state, or enters a non-irradiation state in which light is not radiated to the upper-left small irradiation region 24 by the upper-left light emitting diode 14. According to the upper-right small irradiation region dimming/non-irradiation control, the controller 51 controls so that the upper-right small irradiation region 26 enters a dimmed state in which the amount of light that is radiated to the upper-right small irradiation region 26 by the upper-right light emitting diode 16 is decreased relative to the amount of light that is radiated to the upper-right small irradiation region 26 by the upper-right light emitting diode 16 in the entire-small-irradiation-region irradiation state, or enters a non-irradiation state in which light is not radiated to the upper-right small irradiation region 26 by the upper-right light emitting diode 16. Therefore, the controller 51 can perform control in accordance with various travelling environments so that at least one of the lower-left small irradiation region 23, the lower-right small irradiation region 25, the upper-left small irradiation region 24 and the upper-right small irradiation region 26 enters a dimmed state or a non-irradiation state without an operation being performed by the rider. As a result, the controller 51 can form the irradiation region 200 of the headlight unit 10 which corresponds to various travelling environments. By this means, according to the leaning-vehicle headlight apparatus 8, the degree of design freedom with respect to the irradiation region 200 of the headlight unit 10 in a state in which the vehicle body 6 is leaning can be increased.

Further, according to the leaning-vehicle headlight apparatus 8, when the vehicle body 6 leans in the leftward direction L or rightward direction R, the lower-left small irradiation region 23 and the lower-right small irradiation region 25 which are of low necessity can be placed in a dimmed state or a non-irradiation state. More specifically, when the vehicle body 6 leans in the leftward direction L, the lower-left light emitting diode 13 approaches the road surface. Therefore, the lower-left small irradiation region 23 that is formed by light that the lower-left light emitting diode 13 radiates is illuminated relatively brighter than the areas around the lower-left small irradiation region 23. Therefore, when the vehicle body 6 is leaning to the left L, the necessity of the lower-left small irradiation region 23 is low. For the same reason, when the vehicle body 6 is leaning to the right R, the necessity of the lower-right small irradiation region 25 is low. Therefore, when the vehicle body 6 leans in the leftward direction L or rightward direction R, the controller 51 performs control so that the lower-left small irradiation region 23 or lower-right small irradiation region 25 which is of low necessity enters a dimmed state or a non-irradiation state.

Further, according to the leaning-vehicle headlight apparatus 8, the field of view of the rider can be made wider. More specifically, when the vehicle body 6 is leaning to the left L, the line of sight of the rider is directed in the left-front direction LF. Therefore, the upper-left small irradiation region 24 illuminates the same direction as the direction of the line of sight of the rider. Therefore, according to the leaning-vehicle headlight apparatus 8, in a case where the vehicle body 6 is leaning to the left L, the field of view of the rider can be made wider. For the same reason, according to the leaning-vehicle headlight apparatus 8, in a case where the vehicle body is leaning to the right R, the field of view of the rider can be made wider.

In addition, according to the leaning-vehicle headlight apparatus 8, in a case where a preceding vehicle or an oncoming vehicle is present, imparting of a sensation of discomfort that is caused by a glare to the driver of the preceding vehicle or oncoming vehicle can be suppressed. More specifically, in a case where the vehicle body 6 leans in the leftward direction L, a portion of the upper-left small irradiation region 24 is positioned above U the reference top-end-passing straight line H-H. The aforementioned portion of the upper-left small irradiation region 24 may, in some cases, impart a sensation of discomfort that is caused by a glare to the driver of the preceding vehicle or oncoming vehicle. Therefore, according to the leaning-vehicle headlight apparatus 8, in a case where the vehicle body 6 leans in the leftward direction L, when the detection device detects a preceding vehicle or an oncoming vehicle, the upper-left small irradiation region dimming/non-irradiation control is executed. For the same reason, according to the leaning-vehicle headlight apparatus 8, in a case where the vehicle body 6 leans in the rightward direction R, when the detection device detects a preceding vehicle or an oncoming vehicle, the upper-right small irradiation region dimming/non-irradiation control is executed. By this means, according to the leaning-vehicle headlight apparatus 8, in a case where a preceding vehicle or an oncoming vehicle is present, imparting of a sensation of discomfort that is caused by a glare to the driver of the preceding vehicle or oncoming vehicle can be suppressed.

Further, according to the leaning-vehicle headlight apparatus 8, the controller 51 can calculate the leaning angle θ of the vehicle body 6 using the photodetector camera 54 that detects a preceding vehicle or an oncoming vehicle.

Further, according to the leaning-vehicle headlight apparatus 8, the lower-left small irradiation region 23 extends in the lower left direction FLD, and the lower-right small irradiation region 25 extends in the lower right direction FRD. Therefore, even if the vehicle body 6 leans in the leftward direction L or the rightward direction R, it is difficult for the lower-left small irradiation region 23 and the lower-right small irradiation region 25 to be positioned above U the reference top-end-passing straight line H-H. Hence, it is difficult to impart a sensation of discomfort that is caused by a glare to the driver of a preceding vehicle or an oncoming vehicle.

Further, according to the leaning-vehicle headlight apparatus 8, the upper-left small irradiation region 24 extends in the upper left direction FLU and the upper-right small irradiation region 26 extends in the upper right direction FRU. Therefore, even if the vehicle body 6 leans in the leftward direction L or the rightward direction R, it is difficult for the upper-left small irradiation region 24 and the upper-right small irradiation region 26 to be positioned below D the reference top-end-passing straight line H-H. Hence, even when the leaning vehicle 1 is turning left or is turning right, the upper-left small irradiation region 24 and the upper-right small irradiation region 26 can illuminate an area that is at a distance from the leaning vehicle 1.

Further, according to the leaning-vehicle headlight apparatus 8, it is easy to provide a favorable field of view to the rider, and the leaning-vehicle headlight apparatus 8 is not liable to cause the rider to feel a sense of unease. More specifically, in a state in which the vehicle body 6 is upright, the upper-center irradiation region 22 is disposed above U the reference top-end-passing straight line H-H and below D the reference top-end-passing straight line H-H. Therefore, the bottom end portion of the upper-center irradiation region 22 overlaps with the top end portion of the lower-center irradiation region 21. By this means, in a case where the headlight unit 10 radiates light to both of the lower-center irradiation region 21 and the upper-center irradiation region 22, a dark portion is not formed between the upper-center irradiation region 22 and the lower-center irradiation region 21. Because a dark portion is not formed, it is easy to provide a favorable field of view to the rider, and the leaning-vehicle headlight apparatus 8 is not liable to cause the rider to feel a sense of unease.

### [Regarding irradiation region]

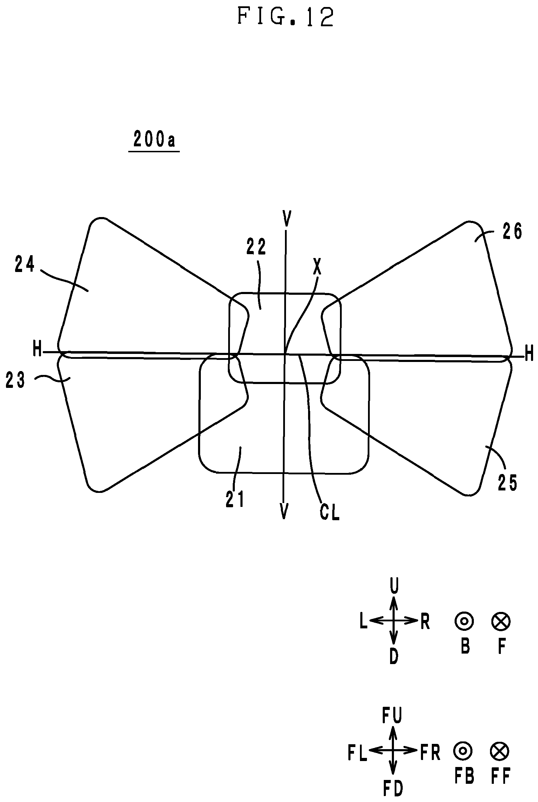

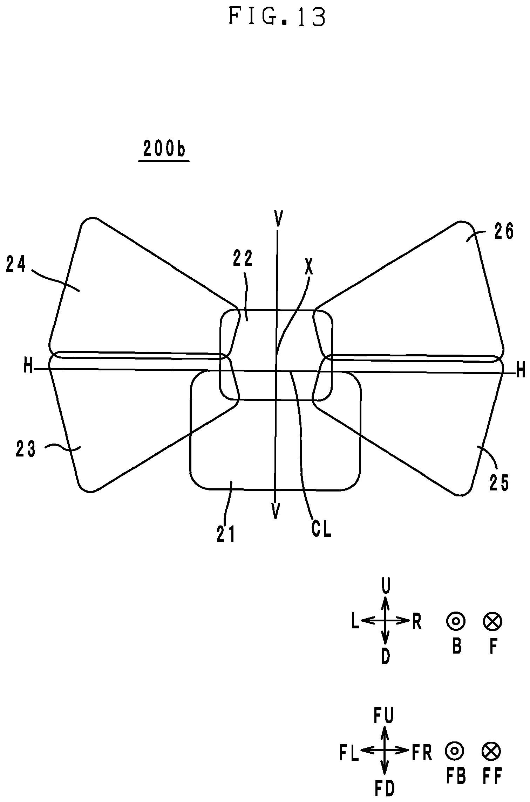

The irradiation region 200 is not limited to the shape illustrated in FIG. 1. Hereunder, an irradiation region 200a according to a first modification and an irradiation region 200b according to a second modification will be described with reference to the accompanying drawings. FIG. 12 is a view illustrating the irradiation region 200a according to the first modification. FIG. 13 is a view illustrating the irradiation region 200b according to the second modification.

As illustrated in FIG. 12, the irradiation region 200a differs from the irradiation region 200 in the respect that the lower-left small irradiation region 23 and the lower-right small irradiation region 25 contact the reference top-end-passing straight line H-H. However, in the irradiation region 200a, the lower-left small irradiation region 23 and the lower-right small irradiation region 25 do not protrude further upward FU than the reference top-end-passing straight line H-H. Apart from the aforementioned difference, the irradiation region 200a is the same as the irradiation region 200. Hence, further description of the irradiation region 200a is omitted.

As illustrated in FIG. 13, the irradiation region 200b differs from the irradiation region 200 with respect to the point the lower-left small irradiation region 23 and the lower-right small irradiation region 25 protrude further upward FU than the reference top-end-passing straight line H-H. Apart from the aforementioned difference, the irradiation region 200b is the same as the irradiation region 200. Hence, further description of the irradiation region 200b is omitted.

### (Second Embodiment)

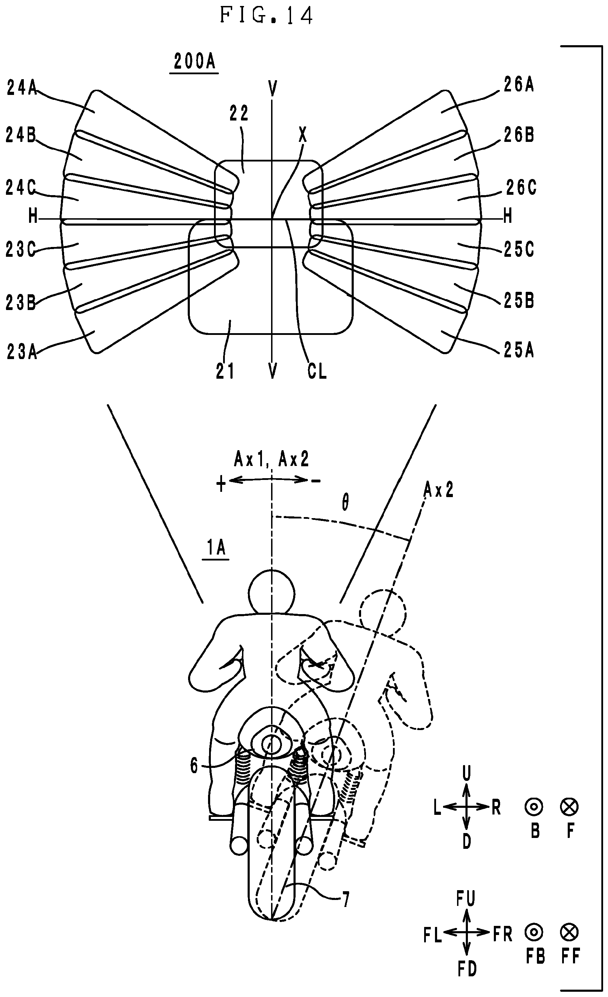

Hereunder, a leaning-vehicle headlight apparatus 8A and a leaning vehicle 1A according to a second embodiment of the present invention will be described with reference to the accompanying drawings. FIG. 14 is a view illustrating the leaning vehicle 1A and the irradiation region 200A of the headlight unit 10A. FIG. 2 will be utilized as a view that illustrates the leaning vehicle 1A as viewed from the front F.

As illustrated in FIG. 14, the leaning vehicle 1A includes a front wheel 2 (see FIG. 2), a vehicle body 6, a rear wheel 7 and the leaning-vehicle headlight apparatus 8A (not illustrated in FIG. 14). The vehicle body 6 of the leaning vehicle 1A is the same as the vehicle body 6 of the leaning vehicle 1, and hence a description thereof is omitted.

### [Headlight Unit]

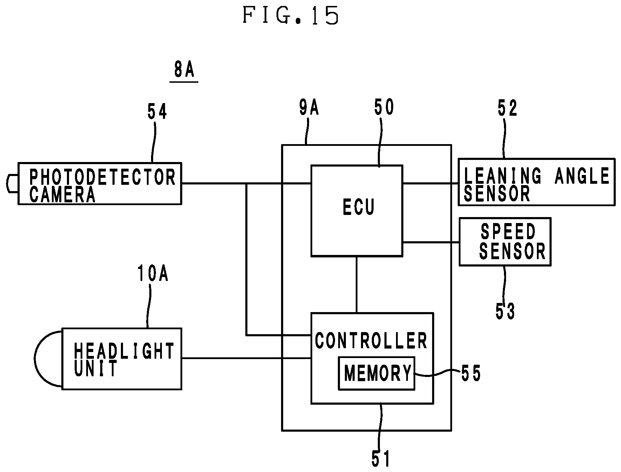

FIG. 15 is a block diagram of the leaning-vehicle headlight apparatus 8A. The leaning-vehicle headlight apparatus 8A includes a control device 9A, the headlight unit 10A, a leaning angle sensor 52, a speed sensor 53 and a photodetector camera 54. Hereunder, the structure of the headlight unit 10 is described. FIG. 3 will be utilized as a drawing of longitudinal section of the vicinity of the headlight unit 10A.

As illustrated in FIG. 3, the headlight unit 10A is attached to the front cowl 5. However, a member to which the headlight unit 10A can be attached is not limited to the front cowl 5. For example, the headlight unit 10A may be attached to a bracket that is supported by the vehicle body frame of the vehicle body 6.

As illustrated in FIG. 3, the vehicle body 6 includes a housing 61 and an outer cover 62. The housing 61 is a box-shaped member having an opening in a face on the front FF side thereof. The outer cover 62 is disposed in front FF of the opening of the housing 61 to thereby block the opening of the housing 61. The outer cover 62 is a transparent member that is made from resin or the like. Thus, a headlight chamber 63 is formed by assembling together the housing 61 and the outer cover 62. The headlight unit 10A is housed inside the headlight chamber 63. Further, the headlight unit 10A is supported by the housing 61. However, the headlight unit 10A may be directly supported by the housing 61, or may be indirectly supported by the housing 61 via another member. Light that the headlight unit 10A radiates passes through the outer cover 62 and is radiated to the front F of the leaning vehicle 1A. Thus, the headlight unit 10A radiates light toward the front F of the leaning vehicle 1A.

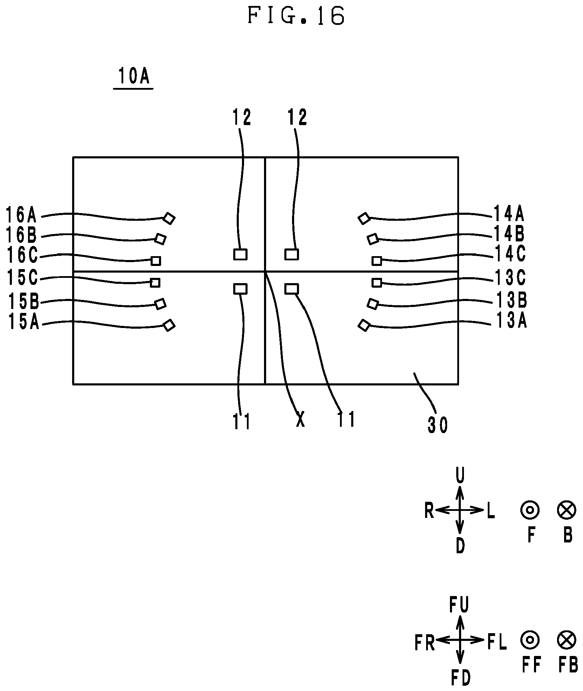

FIG. 16 is a front view of light sources of the headlight unit 10A. In FIG. 16, the headlight unit 10A in a state in which the leaning vehicle 1A is upright is illustrated. As illustrated in FIG. 16, the headlight unit 10A includes two lower-center light emitting diodes 11, two upper-center light emitting diodes 12, lower-left light emitting diodes 13A to 13C, upper-left light emitting diodes 14A to 14C, lower-right light emitting diodes 15A to 15C, and upper-right light emitting diodes 16A to 16C.

The two lower-center light emitting diodes 11 radiate light that, as described later, forms a lower-center irradiation region 21 having a top-end-passing straight line at a top end thereof. That is, the two lower-center light emitting diodes 11 radiate a low beam. The two upper-center light emitting diodes 12 are disposed above FU the two lower-center light emitting diodes 11. As described later, the plurality of upper-center light emitting diodes 12 radiates light that forms an upper-center irradiation region 22. That is, the two upper-center light emitting diodes 12 radiate a high beam.

The lower-left light emitting diodes 13A to 13C are disposed further leftward FL than the two lower-center light emitting diodes 11. As described later, the lower-left light emitting diodes 13A to 13C radiate light that forms lower-left small irradiation regions 23A to 23C, respectively. The lower-left light emitting diodes 13A to 13C are disposed so as to be aligned in the up-down direction FUD. The lower-left light emitting diodes 13A to 13C are disposed on the circumference of the same circle centered on a central axis X of the headlight unit 10. The lower-left light emitting diodes 13A to 13C are chip components.

The upper-left light emitting diodes 14A to 14C are disposed further leftward FL and upward FU than the two upper-center light emitting diodes 12. As described later, the upper-left light emitting diodes 14A to 14C radiate light that forms upper-left small irradiation regions 24A to 24C, respectively. The upper-left light emitting diodes 14A to 14C are disposed so as to be aligned in the up-down direction FUD. The upper-left light emitting diodes 14A to 14C are disposed on the circumference of the same circle centered on the central axis X of the headlight unit 10. The upper-left light emitting diodes 14A to 14C are chip components.

The lower-right light emitting diodes 15A to 15C are disposed further rightward FR than the two lower-center light emitting diodes 11. As described later, the lower-right light emitting diodes 15A to 15C radiate light that forms lower-right small irradiation regions 25A to 25C, respectively. The lower-right light emitting diodes 15A to 15C are disposed so as to be aligned in the up-down direction FUD. The lower-right light emitting diodes 15A to 15C are disposed on the circumference of the same circle centered on the central axis X of the headlight unit 10. The lower-right light emitting diodes 15A to 15C are chip components.

The upper-right light emitting diodes 16A to 16C are disposed further rightward FR and upward FU than the two upper-center light emitting diodes 12. As described later, the upper-right light emitting diodes 16A to 16C radiate light that forms upper-right small irradiation regions 26A to 26C, respectively. The upper-right light emitting diodes 16A to 16C are disposed so as to be aligned in the up-down direction FUD. The upper-right light emitting diodes 16A to 16C are disposed on the circumference of the same circle centered on the central axis X of the headlight unit 10. The upper-right light emitting diodes 16A to 16C are chip components.

### [Inner Lens]

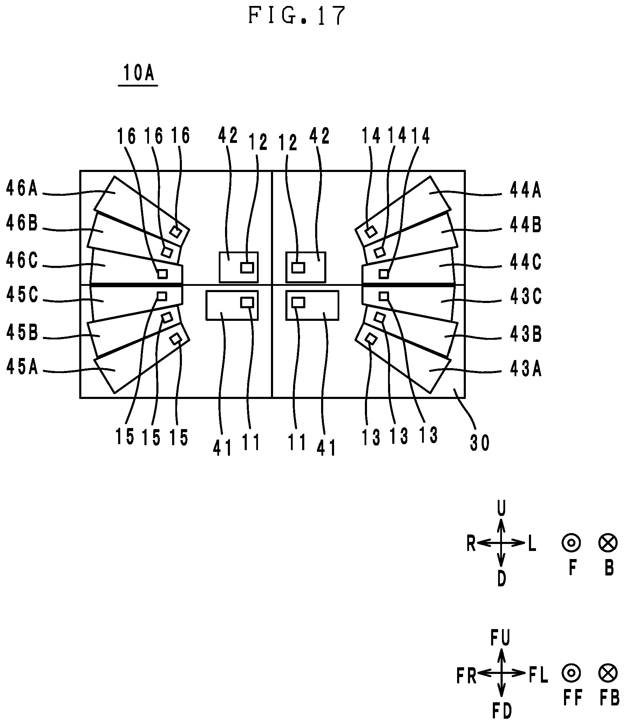

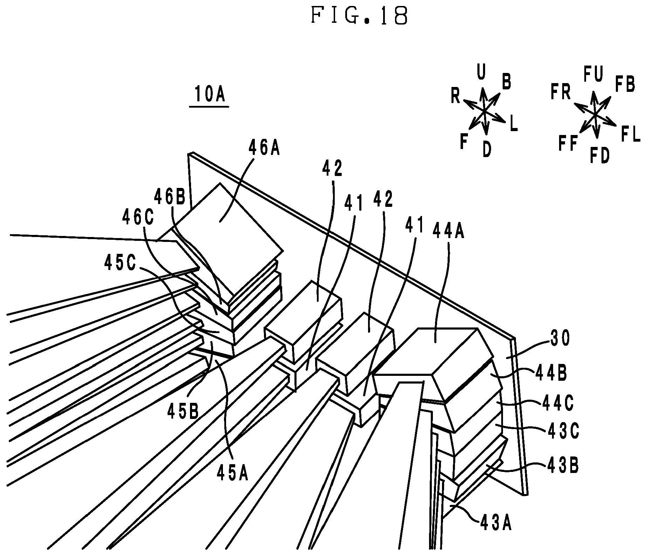

FIG. 17 is a front view of lower-center inner lenses 41, upper-center inner lenses 42, lower-left inner lenses 43A to 43C, upper-left inner lenses 44A to 44C, lower-right inner lenses 45A to 45C, and upper-right inner lenses 46A to 46C. FIG. 18 is a perspective view of the headlight unit. In FIG. 18, a state in which the lower-center light emitting diodes 11, the upper-center light emitting diodes 12, the lower-left light emitting diodes 13A to 13C, the upper-left light emitting diodes 14A to 14C, the lower-right light emitting diodes 15A to 15C and the upper-right light emitting diodes 16A to 16C are all radiating light is schematically illustrated.

As illustrated in FIG. 17 and FIG. 18, the headlight unit 10A includes the lower-center inner lenses 41, the upper-center inner lenses 42, the lower-left inner lenses 43A to 43C, the upper-left inner lenses 44A to 44C, the lower-right inner lenses 45A to 45C, and the upper-right inner lenses 46A to 46C. The lower-center inner lenses 41 are disposed in front FF of the lower-center light emitting diodes 11. The upper-center inner lenses 42 are disposed in front FF of the upper-center light emitting diodes 12. The lower-left inner lenses 43A to 43C are disposed in front FF of the lower-left light emitting diodes 13A to 13C, respectively. The upper-left inner lenses 44A to 44C are disposed in front FF of the upper-left light emitting diodes 14A to 14C, respectively. The lower-right inner lenses 45A to 45C are disposed in front FF of the lower-right light emitting diodes 15A to 15C, respectively. The upper-right inner lenses 46A to 46C are disposed in front FF of the upper-right light emitting diodes 16A to 16C, respectively.

The lower-center inner lenses 41, the upper-center inner lenses 42, the lower-left inner lenses 43A to 43C, the upper-left inner lenses 44A to 44C, the lower-right inner lenses 45A to 45C and the upper-right inner lenses 46A to 46C collect divergent light rays radiated by the lower-center light emitting diodes 11, the upper-center light emitting diodes 12, the lower-left light emitting diodes 13A to 13C, the upper-left light emitting diodes 14A to 14C, the lower-right light emitting diodes 15A to 15C and the upper-right light emitting diodes 16A to 16C, respectively, and emit the light to the front FF. The shapes of the lower-center inner lenses 41, the upper-center inner lenses 42, the lower-left inner lenses 43A to 43C, the upper-left inner lenses 44A to 44C, the lower-right inner lenses 45A to 45C and the upper-right lenses 46A to 46C correspond to the shapes of small irradiation regions, described later, respectively.

### [Outer Lens]

As illustrated in FIG. 3, an outer lens 47 is disposed in front FF of the lower-center inner lenses 41, the upper-center inner lenses 42, the lower-left inner lenses 43A to 43C, the upper-left inner lenses 44A to 44C, the lower-right inner lenses 45A to 45C and the upper-right inner lenses 46A to 46C. Light from the lower-center inner lenses 41, the upper-center inner lenses 42, the lower-left inner lenses 43A to 43C, the upper-left inner lenses 44A to 44C, the lower-right inner lenses 45A to 45C and the upper-right inner lenses 46A to 46C is incident on the outer lens 47. The outer lens 47 causes light incident thereon to be emitted to the front FF.

### [Control Device]

It is desirable that the leaning vehicle 1A be capable of executing control to place the lower-left light emitting diodes 13A to 13C, the upper-left light emitting diodes 14A to 14C, the lower-right light emitting diodes 15A to 15C and the upper-right light emitting diodes 16A to 16C that form small irradiation regions that are of low necessity when the vehicle body 6 leans in the leftward direction L or the rightward direction R into a dimmed state or an extinguished state. By this means, the irradiation region 200 can be formed to correspond with various travelling environments, and the degree of design freedom of an irradiation region 200A of the headlight unit 10A can be increased. In order to realize such control of the lower-left light emitting diodes 13A to 13C, the upper-left light emitting diodes 14A to 14C, the lower-right light emitting diodes 15A to 15C and the upper-right light emitting diodes 16A to 16C, the leaning vehicle 1A includes the control device 9A.

The control device 9A includes a control board 30 that is illustrated in FIG. 2 and FIG. 16. The lower-center light emitting diodes 11, the upper-center light emitting diodes 12, the lower-left light emitting diodes 13A to 13C, the upper-left light emitting diodes 14A to 14C, the lower-right light emitting diodes 15A to 15C and the upper-right light emitting diodes 16A to 16C are mounted on the control board 30. When the headlight unit 10A is attached to the leaning vehicle 1A, the control board 30 is connected to an unshown power supply.

As illustrated in FIG. 15, the control device 9A includes an ECU 50 and a controller 51. The ECU 50 includes a microcomputer. The ECU 50 is connected to a leaning angle sensor 52 and a speed sensor 53. The leaning angle sensor 52 is, for example, a gyro sensor. The leaning angle sensor 52 detects an angular velocity to the left L or right R of the vehicle body 6. Information regarding the angular velocity of the vehicle body 6 that the leaning angle sensor 52 detects is output to the ECU 50. The speed sensor 53 detects the speed of the leaning vehicle 1. Information regarding the speed of the leaning vehicle 1 that the speed sensor 53 detects is output to the ECU 50. The ECU 50 calculates a leaning angle θ based on the information that is output from the leaning angle sensor 52 and the speed sensor 53. The ECU 50 is connected to the controller 51. Information (leaning angle information) regarding the leaning angle θ which the ECU 50 has calculated is output to the controller 51.

The controller 51 includes a memory 55. The memory 55 stores the relation between the leaning angle θ of the vehicle body 6 and the irradiation region 200A of the headlight unit 10A. The controller 51 determines the irradiation region 200A of the headlight unit 10A based on the leaning angle information from the ECU 50. The controller 51 is connected to the headlight unit 10A. The controller 51 outputs a control signal to the headlight unit 10A in order to form the irradiation region 200A that has been determined. An electric current that flows to the lower-center light emitting diodes 11, the upper-center light emitting diodes 12, the lower-left light emitting diodes 13A to 13C, the upper-left light emitting diodes 14A to 14C, the lower-right light emitting diodes 15A to 15C and the upper-right light emitting diodes 16A to 16C is controlled based on a control signal from the controller 51. By this means, the headlight unit 10A can form the irradiation region 200A that corresponds with various travelling environments.

The photodetector camera 54 is attached to the vehicle body 6. Therefore, the photodetector camera 54 leans in the leftward direction L or the rightward direction R together with the vehicle body 6. The photodetector camera 54 detects light that a preceding vehicle or an oncoming vehicle emits by photographing the area in the front F of the leaning vehicle 1. The photodetector camera 54 includes a light receiving element. The light receiving element is, for example, a CCD or a CMOS. Light that a preceding vehicle emits is, for example, light of a tail light of the preceding vehicle. Light that an oncoming vehicle emits is, for example, light of a headlight of the oncoming vehicle. The photodetector camera 54 is connected to the ECU 50. When the photodetector camera 54 detects light of a preceding vehicle or an oncoming vehicle, the photodetector camera 54 outputs a video signal to the ECU 50. The ECU 50 calculates the position of the preceding vehicle or oncoming vehicle based on the video signal that is output from the photodetector camera 54 and the calculated leaning angle θ. The information regarding the position of a preceding vehicle or an oncoming vehicle (hereunder, referred to as "positional information regarding a preceding vehicle and the like") is output to the controller 51. The controller 51 controls the irradiation region 200A of the headlight unit 10A based on the leaning angle information and the positional information regarding a preceding vehicle and the like that is output from the ECU 50.

### [Irradiation Region]

The irradiation region 200A of the headlight unit 10A will now be described with reference to the accompanying drawings. As illustrated in FIG. 14, the headlight unit 10A is capable of forming the lower-center irradiation region 21, the upper-center irradiation region 22, the lower-left small irradiation regions 23A to 23C, the upper-left small irradiation regions 24A to 24C, the lower-right small irradiation regions 25A to 25C and the upper-right small irradiation regions 26A to 26C.

The lower-center irradiation region 21 is formed by light that the lower-center light emitting diodes 11 radiate. The upper-center irradiation region 22 is formed by light that the upper-center light emitting diodes 12 radiate. The lower-left small irradiation region 23A is formed by light that the lower-left light emitting diode 13A radiates. The lower-left small irradiation region 23B is formed by light that the lower-left light emitting diode 13B radiates. The lower-left small irradiation region 23C is formed by light that the lower-left light emitting diode 13C radiates. The upper-left small irradiation region 24A is formed by light that the upper-left light emitting diode 14A radiates. The upper-left small irradiation region 24B is formed by light that the upper-left light emitting diode 14B radiates. The upper-left small irradiation region 24C is formed by light that the upper-left light emitting diode 14C radiates.

The lower-right small irradiation region 25A is formed by light that the lower-right light emitting diode 15A radiates. The lower-right small irradiation region 25B is formed by light that the lower-right light emitting diode 15B radiates. The lower-right small irradiation region 25C is formed by light that the lower-right light emitting diode 15C radiates. The upper-right small irradiation region 26A is formed by light that the upper-right light emitting diode 16A radiates. The upper-right small irradiation region 26B is formed by light that the upper-right light emitting diode 16B radiates. The upper-right small irradiation region 26C is formed by light that the upper-right light emitting diode 16C radiates.

### [Lower-center irradiation region]

The lower-center irradiation region 21 forms a rectangular shape having a long side that extends in the left-right direction FLR and a short side that extends in the up-down direction FUD. The lower-center irradiation region 21 has a top-end-passing straight line CL that extends in the left-right direction FLR at the top end thereof (upper FU long side). The top-end-passing straight line CL, a reference top-end-passing straight line H-H and an imaginary vertical line V-V with respect to the leaning vehicle 1A are the same as the top-end-passing straight line CL, the reference top-end-passing straight line H-H and the imaginary vertical line V-V with respect to the leaning vehicle 1, and therefore a description of the aforementioned lines will be omitted here. When in a state in which the vehicle body 6 is upright, the lower-center irradiation region 21 is disposed below D the reference top-end-passing straight line H-H. The lower-center irradiation region 21 corresponds to the irradiation region 200A of a low beam.

### [Upper-center irradiation region]

The upper-center irradiation region 22 forms a rectangular shape having a long side that extends in the left-right direction FLR and a short side that extends in the up-down direction FUD. The length of the lower-center irradiation region 21 in the left-right direction FLR is longer than the length of the upper-center irradiation region 22 in the left-right direction FLR. In addition, the length of the lower-center irradiation region 21 in the up-down direction FUD is longer than the length of the upper-center irradiation region 22 in the up-down direction FUD. This is because the irradiation region required for a low beam is wider than the irradiation region required for a high beam.

In a state in which the vehicle body 6 is upright, the upper-center irradiation region 22 is disposed above U the reference top-end-passing straight line H-H and below D the reference top-end-passing straight line H-H. Therefore, the bottom end portion of the upper-center irradiation region 22 overlaps with the top end portion of the lower-center irradiation region 21. By this means, in a case where the headlight unit 10A operates in the high-beam mode, a dark portion is not formed between a high beam (upper-center irradiation region 22) and low beam (lower-center irradiation region 21). Because a dark portion is not formed, it is easy to provide a favorable field of view to the rider, and the leaning-vehicle headlight apparatus 8A is not liable to cause the rider to feel a sense of unease.

### [Lower-left small irradiation regions]

The lower-left small irradiation regions 23A to 23C are disposed to the left FL of the lower-center irradiation region 21. In a state in which the vehicle body 6 is upright, the lower-left small irradiation regions 23A to 23C are disposed below D the reference top-end-passing straight line H-H. Therefore, the headlight unit 10A can illuminate a wider area in comparison to a headlight unit that radiates light that forms only the lower-center irradiation region 21. The lower-left small irradiation regions 23A to 23C are disposed so as to be aligned in the up-down direction FUD.
Further, the lower-left small irradiation regions 23A to 23C which are adjacent preferably overlap with each other. This is because if the lower-left small irradiation regions 23A to 23C which are adjacent are disposed with spaces therebetween, the spaces may become dark portions.

The lower-left small irradiation regions 23A to 23C preferably extend in the lower-left direction FLD. In this case, as described later, when the vehicle body 6 leans in the rightward direction R, it is difficult for the lower-left small irradiation regions 23A to 23C to be positioned further upward U than the reference top-end-passing straight line H-H. Therefore, it is difficult for the headlight unit 10A to impart a sensation of discomfort that is caused by a glare to the driver of a preceding vehicle or an oncoming vehicle even if the vehicle body 6 leans in the rightward direction R.

The lower-left small irradiation regions 23A to 23C preferably extend radially around the central axis X. In this case, an angle formed between the reference top-end-passing straight line H-H and the extending direction of the lower-left small irradiation region 23A that is disposed furthest on the downward FD side is greater than the respective angles formed between the reference top-end-passing straight line H-H and the extending directions of the lower-left small irradiation regions 23B and 23C that are disposed on the upward FU side. The term "extending direction" with respect to the lower-left small irradiation regions 23A to 23C, the upper-left small irradiation regions 24A to 24C, the lower-right small irradiation regions 25A to 25C and the upper-right small irradiation regions 26A to 26C refers to the extending direction of a center line in the width direction of the lower-left small irradiation regions 23A to 23C, the upper-left small irradiation regions 24A to 24C, the lower-right small irradiation regions 25A to 25C and the upper-right small irradiation regions 26A to 26C, respectively. The reason this configuration is preferable is as follows.

Preferably, the respective angles formed between the extending direction of each of the lower-left small irradiation regions 23A to 23C and the reference top-end-passing straight line H-H are large. The reason is that, even if the vehicle body 6 leans in the rightward direction R, it will be difficult for the lower-left small irradiation regions 23A to 23C to be positioned further upward U than the reference top-end-passing straight line H-H. However, if the angle formed between the reference top-end-passing straight line H-H and the extending direction of the lower-left small irradiation region 23C that is near to the reference top-end-passing straight line H-H is excessively large, the left end of the lower-left small irradiation region 23C will be separated by a large amount to the downward D from the reference top-end-passing straight line H-H. As a result, the length in the left-right direction LR of the irradiation region 200A in the vicinity of the reference top-end-passing straight line H-H will shorten. In particular, the lower-left small irradiation region 23C that is near the reference top-end-passing straight line H-H illuminates a region that is further away from the rider compared to regions illuminated by the lower-left small irradiation regions 23A and 23B. Therefore, from the standpoint of making a field of view with respect to a distant area wider, a smaller angle is preferable as the angle that is formed between the reference top-end-passing straight line H-H and the extending direction of the lower-left small irradiation region 23C that is near to the reference top-end-passing straight line H-H.

In a case where the lower-left small irradiation regions 23A to 23C extend radially around the central axis X, an angle formed between the reference top-end-passing straight line H-H and the extending direction of the lower-left small irradiation region 23C that is furthest on the upward FU side is small. Therefore, a field of view with respect to a distant area can be made wider. In a case where the lower-left small irradiation regions 23A to 23C extend radially from the central axis X, the further to the downward FD a lower-left small irradiation region is, the greater the angle will be between the extending direction of the lower-left small irradiation region and the reference top-end-passing straight line H-H. Therefore, even if the leaning angle θ of the vehicle body 6 is large, it will be difficult for the lower-left small irradiation regions 23A and 23B which are located further in the downward FD direction to be positioned further upward U than the reference top-end-passing straight line H-H. Accordingly, the headlight unit 10A is not liable to impart a sensation of discomfort that is caused by a glare to the driver of a preceding vehicle or an oncoming vehicle. In short, in a case where the lower-left small irradiation regions 23A to 23C extend radially from the central axis X, a balance can be achieved between obtaining a wide field of view with respect to a distant area and suppressing the occurrence of a sensation of discomfort due to a glare.

### [Upper-left small irradiation regions]

The upper-left small irradiation regions 24A to 24C are disposed to the left FL of the upper-center irradiation region 22. In a state in which the vehicle body 6 is upright, the upper-left small irradiation regions 24A to 24C are disposed above U the reference top-end-passing straight line H-H. Therefore, the headlight unit 10A can illuminate a wider area in comparison to a headlight unit that radiates light that forms only the upper-center irradiation region 22. The upper-left small irradiation regions 24A to 24C are disposed so as to be aligned in the up-down direction FUD. Further, the upper-left small irradiation regions 24A to 24C which are adjacent preferably overlap with each other. This is because if the upper-left small irradiation regions 24A to 24C which are adjacent are disposed with spaces therebetween, the spaces may become dark portions.

Preferably the upper-left small irradiation regions 24A to 24C extend in the upper left direction FLU. In such a case, as described later, when the vehicle body 6 leans in the leftward direction L, it is difficult for the upper-left small irradiation regions 24A to 24C to be positioned further downward D than the reference top-end-passing straight line H-H. Therefore, according to the headlight unit 10A, the upper-left small irradiation regions 24A to 24C can illuminate an area that is at a distance from the leaning vehicle 1A even when the vehicle body 6 leans in the leftward direction L.

Preferably the upper-left small irradiation regions 24A to 24C extend radially around the central axis X. In this case, an angle formed between the reference top-end-passing straight line H-H and the extending direction of the upper-left small irradiation region 24A that is disposed furthest on the upward FU side is larger than the angles formed between the extending directions of the upper-left small irradiation regions 24B and 24C disposed on the downward FD thereof and the reference top-end-passing straight line H-H.

The lower-left small irradiation regions 23A to 23C and the upper-left small irradiation regions 24A to 24C that are described above consist of six regions. On the other hand, the lower-center irradiation region 21 and the upper-center irradiation region 22 consist of two regions. Accordingly, the total of the number of the lower-left small irradiation regions 23A to 23C and the number of the upper-left small irradiation regions 24A to 24C is larger than the total of the number of the lower-center irradiation region 21 and the number of the upper-center irradiation region 22.

### [Lower-right small irradiation regions and upper-right small irradiation regions]

The lower-right small irradiation regions 25 are a linearly symmetric shape with respect to the lower-left small irradiation regions 23 about the imaginary vertical line V-V. Further, the upper-right small irradiation regions 26 are a linearly symmetric shape with respect to the upper-left small irradiation regions 24 about the imaginary vertical line V-V. Therefore, a detailed description of the lower-right small irradiation regions 25 and the upper-right small irradiation regions 26 is omitted herein.

The lower-right small irradiation regions 25A to 25C and the upper-right small irradiation regions 26A to 26C that are described above consist of six regions. On the other hand, the lower-center irradiation region 21 and the upper-center irradiation region 22 consist of two regions. Accordingly, the total of the number of the lower-right small irradiation regions 25A to 25C and the number of the upper-right small irradiation regions 26A to 26C is larger than the total of the number of the lower-center irradiation region 21 and the number of the upper-center irradiation region 22.

As described above, the headlight unit 10A can form the lower-left small irradiation regions 23A to 23C, the lower-right small irradiation regions 25A to 25C, the upper-left small irradiation regions 24A to 24C and the upper-right small irradiation regions 26A to 26C. Therefore, the headlight unit 10A can illuminate a wide area in the front F of the leaning vehicle 1A. However, as described above, it is desirable that the headlight unit 10A be capable of forming the irradiation region 200A which can correspond to a greater number of travelling environments. Therefore, in some cases it is desired to change the irradiation region 200A of the headlight unit 10A depending on the travelling environment. This point is described in detail hereunder.

### [Irradiation region when leaning]

When the leaning vehicle 1A turns, the vehicle body 6 leans in the turning direction. Because the headlight unit 10A is fixed to the vehicle body 6, the headlight unit 10A also leans when the vehicle body 6 leans. As a result, the irradiation region 200A of the headlight unit 10A also leans. Hereunder, the irradiation region 200A of the headlight unit 10A in a case where the vehicle body 6 leans in the leftward direction L will be described.

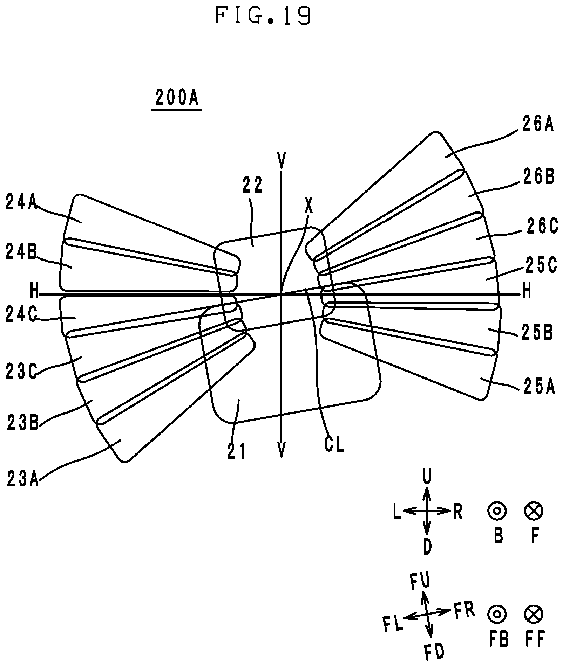

FIG. 19 is a view that illustrates the irradiation region 200A in a case where the vehicle body 6 leans in the leftward direction L.

### [Lower-left small irradiation regions when turning left]

As illustrated in FIG. 19, when the vehicle body 6 leans in the leftward direction L, the lower-left light emitting diodes 13A to 13C approach the road surface. Therefore, the lower-left small irradiation regions 23A to 23C which are formed by light that the lower-left light emitting diodes 13A to 13C radiate are illuminated more brightly compared to the surrounding area. Accordingly, when the leaning vehicle 1A is turning left, it is desirable for the amount of light of the lower-left small irradiation regions 23A to 23C to be reduced (lower-left small irradiation region dimming/non-irradiation control). In order to reduce the amount of light of the lower-left small irradiation regions 23A to 23C, the controller 51 controls the lower-left light emitting diodes 13A to 13C so as to enter a dimmed state or an extinguished state from a lit state. By this means, when the leaning vehicle 1A is turning left, the headlight unit 10A can form the irradiation region 200A in which the amount of light is uniform.

The control of the lower-left light emitting diodes 13A to 13C when the leaning vehicle 1A is turning left will now be described referring to FIG. 19. The memory 55 of the controller 51 stores the relation between the leaning angle θ to the left L and electric currents that are fed to the lower-left light emitting diodes 13A to 13C. The controller 51 controls the electric currents that are fed to the lower-left light emitting diodes 13A to 13C based on leaning angle information that is output from the ECU 50. That is, the controller 51 executes control to place the lower-left light emitting diodes 13A to 13C in a dimmed state or an extinguished state from a lit state. By this means, the amount of light of the lower-left small irradiation regions 23A to 23C is reduced. According to this control, control of the lower-left light emitting diodes 13A to 13C can be executed without an operation being performed by the rider.

### [Upper-left small irradiation regions when turning left]

As illustrated in FIG. 19, when the vehicle body 6 leans in the leftward direction L, the upper-left small irradiation region 24C that is formed by light that the upper-left light emitting diode 14C radiates is located further downward D than the reference top-end-passing straight line H-H. On the other hand, the upper-left small irradiation regions 24A and 24B that are disposed above FU the upper-left small irradiation region 24C are located further upward U than the reference top-end-passing straight line H-H. When the leaning vehicle 1A is turning left, the line of sight of the rider is directed in the left-front direction LF. The upper-left small irradiation regions 24A and 24B that are located further upward U than the reference top-end-passing straight line H-H illuminate the same direction as the direction of the line of sight of the rider. Therefore, when the leaning vehicle 1A is turning left, the upper-left small irradiation regions 24A and 24B that are located further upward U than the reference top-end-passing straight line H-H make the field of view of the rider wider.

However, in a case where a preceding vehicle or an oncoming vehicle is present, the small irradiation regions that are located further upward U than the reference top-end-passing straight line H-H may sometimes impart a sensation of discomfort that is caused by a glare to the driver of the preceding vehicle or oncoming vehicle. Therefore, in a case where a preceding vehicle or an oncoming vehicle is present when the leaning vehicle 1A is turning left, it is desirable to decrease the amount of light of the upper-left small irradiation regions 24A and 24B which are located further upward U than the reference top-end-passing straight line H-H (upper-left small irradiation region dimming/non-irradiation control). The controller 51 controls the upper-left light emitting diodes 14A and 14B so as to enter a dimmed state or an extinguished state from a lit state in order to reduce the amount of light of the upper-left small irradiation regions 24A and 24B. By this means, while widening the field of view of the rider when turning left, the headlight unit 10A can also suppress the occurrence of a situation in which a sensation of discomfort due to a glare is imparted to the driver of a preceding vehicle or an oncoming vehicle.

The control of the upper-left light emitting diodes 14A to 14C when the leaning vehicle 1 is turning left as illustrated in FIG. 19 will now be described. The memory 55 of the controller 51 stores the relation between the leaning angle θ and the upper-left small irradiation regions 24A to 24C which are located further upward U than the reference top-end-passing straight line H-H. The memory 55 stores the relation between the leaning angle θ to the left L and electric currents that are fed to the upper-left light emitting diodes 14A to 14C.

As described above, the photodetector camera 54 detects the presence or absence of a preceding vehicle or an oncoming vehicle. Upon detecting a preceding vehicle or an oncoming vehicle, the photodetector camera 54 outputs a video signal to the controller 51. Upon receiving the video signal from the photodetector camera 54, the controller 51 controls electric currents that are fed to the upper-left light emitting diodes 14A and 14B based on leaning angle information from the ECU 50. That is, the controller 51 executes control that places the upper-left light emitting diodes 14A and 14B in a dimmed state or an extinguished state from a lit state. By this means, the amount of light of the upper-left small irradiation regions 24A and 24B that are located further upward U than the reference top-end-passing straight line H-H is decreased.

On the other hand, the upper-left small irradiation region 24C that the upper-left light emitting diode 14C forms is located further downward D than the reference top-end-passing straight line H-H. Therefore, even in a case where a preceding vehicle or an oncoming vehicle is present, the possibility that the upper-left small irradiation region 24C will impart a sensation of discomfort that is caused by a glare to the driver of a preceding vehicle or an oncoming vehicle is low. Accordingly, the controller 51 executes control that places the upper-left light emitting diode 14C in a lit state. According to the control described above, control of the upper-left light emitting diodes 14A to 14C can be executed without an operation being performed by the rider.

### [Lower-right small irradiation regions when turning left]

As illustrated in FIG. 19, when the vehicle body 6 leans in the leftward direction L, at least one portion of the lower-right small irradiation region 25C is located further upward U than the reference top-end-passing straight line H-H. As described above, there is a possibility that an irradiation region which is located further upward U than the reference top-end-passing straight line H-H will impart a sensation of discomfort that is caused by a glare to the driver of a preceding vehicle or an oncoming vehicle. That is, even if the leaning vehicle 1A does not impart a sensation of discomfort that is due to a glare to the driver of a preceding vehicle or an oncoming vehicle in a state in which the vehicle body 6 is upright, in some cases the leaning vehicle 1A may impart a sensation of discomfort that is due to a glare to the driver of a preceding vehicle or an oncoming vehicle when the vehicle body 6 is in a leaning state. Therefore, in a case where a preceding vehicle or an oncoming vehicle is present when the leaning vehicle 1A is turning left, it is desirable to decrease the amount of light of the lower-right small irradiation region 25C that is located further upward U than the reference top-end-passing straight line H-H (lower-right small irradiation region dimming/non-irradiation control). The controller 51 controls the lower-right light emitting diode 15C so as to enter a dimmed state or an extinguished state from a lit state in order to reduce the amount of light of the lower-right small irradiation region 25C.

The control of the lower-right light emitting diodes 15A to 15C when the leaning vehicle 1A is turning left will now be described referring to FIG. 19. The memory 55 of the controller 51 stores the relation between the leaning angle θ and the lower-right small irradiation regions 25A to 25C which are positioned further upward U than the reference top-end-passing straight line H-H. The memory 55 stores the relation between predetermined leaning angles θ to the left L and electric currents that are fed to the lower-right light emitting diodes 15A to 15C.

Upon detecting a preceding vehicle or an oncoming vehicle, the photodetector camera 54 outputs a video signal to the controller 51. Upon receiving the video signal from the photodetector camera 54, the controller 51 controls an electric current that is fed to the lower-right light emitting diode 15C based on leaning angle information from the ECU 50. That is, the controller 51 executes control that places the lower-right light emitting diode 15C in a dimmed state or an extinguished state from a lit state. By this means, the amount of light of the lower-right small irradiation region 25C that is located further upward U than the reference top-end-passing straight line H-H is decreased.

On the other hand, the lower-right small irradiation regions 25A and 25B that the lower-right light emitting diodes 15A and 15B form are located further downward D than the reference top-end-passing straight line H-H. Therefore, even in a case where a preceding vehicle or an oncoming vehicle is present, the lower-right small irradiation regions 25A and 25B will not impart a sensation of discomfort that is caused by a glare to the driver of the preceding vehicle or oncoming vehicle. Therefore, the controller 51 executes control that places the lower-right light emitting diodes 15A and 15B in a lit state. According to the control described above, control of the lower-right light emitting diodes 15A to 15C can be executed without an operation being performed by the rider.

### [Upper-right small irradiation region when turning left]

As illustrated in FIG. 19, when the vehicle body 6 leans in the leftward direction L, the upper-right small irradiation regions 26A to 26C that are formed by light which the upper-right light emitting diodes 16A to 16C radiate are located further upward U than the reference top-end-passing straight line H-H. As described above, when the leaning vehicle 1A is turning left, the line of sight of the rider is directed in the left-front direction LF. The upper-right small irradiation regions 26A to 26C which are located further upward U than the reference top-end-passing straight line H-H illuminate a direction that is different from the direction of the line of sight of the rider. Therefore, when the leaning vehicle 1A is turning left, the upper-right small irradiation regions 26A to 26C that are located further upward U than the reference top-end-passing straight line H-H are of low necessity for the rider. Further, when the leaning vehicle 1A is turning left, the upper-right small irradiation regions 26A to 26C are upward U than the reference top-end-passing straight line H-H. Therefore, in a case where a preceding vehicle or an oncoming vehicle is present, in some cases the upper-right small irradiation regions 26A to 26C may impart a sensation of discomfort that is caused by a glare to the driver of the preceding vehicle or oncoming vehicle. Consequently, when the leaning vehicle 1A is turning left it is desirable to reduce the amount of light of the upper-right small irradiation regions 26A to 26C that are located further upward U than the reference top-end-passing straight line H-H (upper-right small irradiation region dimming/non-irradiation control). In order to reduce the amount of light of the upper-right small irradiation regions 26A to 26C, the controller 51 performs control to place the upper-right light emitting diodes 16A to 16C in a dimmed state or an extinguished state from a lit state.

The control of the upper-right light emitting diodes 16A to 16C when the leaning vehicle 1A is turning left will now be described referring to FIG. 19. The memory 55 of the controller 51 stores the relation between the leaning angle θ to the left L and electric currents that are fed to the upper-right light emitting diodes 16A to 16C.

Upon detecting a preceding vehicle or an oncoming vehicle, the photodetector camera 54 outputs a video signal to the controller 51. Upon receiving the video signal from the photodetector camera 54, the controller 51 controls electric currents that are fed to the upper-right light emitting diodes 16A to 16C based on leaning angle information from the ECU 50. That is, the controller 51 executes control that places the upper-right light emitting diodes 16A to 16C in a dimmed state or an extinguished state from a lit state. By this means, the amount of light of the upper-right small irradiation regions 26A to 26C is decreased. According to this control, control of the upper-right light emitting diodes 16A to 16C can be executed without an operation being performed by the rider.

In a case where the vehicle body 6 leans in the rightward direction R, the relation between left and right is merely symmetrically mirrored relative to the case where the vehicle body 6 leans in the leftward direction L. Therefore, a description of the irradiation region 200A in a case where the vehicle body 6 leans in the rightward direction R is omitted here.

### [Effects]

According to the leaning-vehicle headlight apparatus 8A, for the same reason as the reason with respect to the leaning-vehicle headlight apparatus 8, a wide area in the front F of the leaning vehicle 1A can be illuminated. Further, according to the leaning-vehicle headlight apparatus 8A, for the same reason as the reason with respect to the leaning-vehicle headlight apparatus 8, the degree of design freedom of the irradiation region 200A of the headlight unit 10A when the vehicle body 6 is in a leaning state can be increased. Further, according to the leaning-vehicle headlight apparatus 8A, for the same reason as the reason with respect to the leaning-vehicle headlight apparatus 8, when the vehicle body 6 leans in the leftward direction L or right R, the lower-left small irradiation regions 23A to 23C or the lower-right small irradiation regions 25A to 25C that are of low necessity can be placed in a dimmed state or a non-irradiation state. Further, according to the leaning-vehicle headlight apparatus 8A, for the same reason as the reason with respect to the leaning-vehicle headlight apparatus 8A, the field of view of the rider can be made wider. In addition, according to the leaning-vehicle headlight apparatus 8A, for the same reason as the reason with respect to the leaning-vehicle headlight apparatus 8, in a case where a preceding vehicle or an oncoming vehicle is present, the occurrence of a situation in which a sensation of discomfort that is caused by a glare is imparted to the driver of the preceding vehicle or oncoming vehicle can be suppressed. Furthermore, according to the leaning-vehicle headlight apparatus 8A, for the same reason as the reason with respect to the leaning-vehicle headlight apparatus 8, it is easy to provide a favorable field of view to the rider, and the leaning-vehicle headlight apparatus 8A is not liable to cause the rider to feel a sense of unease.

According to the leaning-vehicle headlight apparatus 8A, the degree of design freedom with respect to the irradiation region 200A of the headlight unit 10A in a state in which the vehicle body 6 is leaning can be further increased. More specifically, the lower-left small irradiation regions 23A to 23C are formed. The upper-left small irradiation regions 24A to 24C are formed. The lower-right small irradiation regions 25A to 25C are formed. The upper-right small irradiation regions 26A to 26C are formed. By this means, in accordance with the leaning angle θ to the left L or right R of the vehicle body 6, some or all of the lower-left small irradiation regions 23A to 23C, some or all of the upper-left small irradiation regions 24A to 24C, some or all of the lower-right small irradiation regions 25A to 25C, or some or all of the upper-right small irradiation regions 26A to 26C can be placed in a dimmed state or a non-irradiation state. By this means, according to the leaning-vehicle headlight apparatus 8A, the degree of design freedom with respect to the irradiation region 200A of the headlight unit 10A when the vehicle body 6 is in a leaning state can be further increased.

In addition, according to the leaning-vehicle headlight apparatus 8A, the total of the number of the lower-left small irradiation regions 23A to 23C and the number of the upper-left small irradiation regions 24A to 24C, and the total of the number of the lower-right small irradiation regions 25A to 25C and the number of the upper-right small irradiation regions 26A to 26C are large. Therefore, the degree of design freedom with respect to the irradiation region 200A of the headlight unit 10A when the vehicle body 6 is in a leaning state can be further increased.

In this connection, it is desirable that a plurality of small irradiation regions like the lower-left small irradiation regions 23A to 23C be provided in the irradiation region 200A. Also, it is desirable that a plurality of small irradiation regions like the upper-left small irradiation regions 24A to 24C be provided in the irradiation region 200A. Further, it is desirable that a plurality of small irradiation regions like the lower-right small irradiation regions 25A to 25C be provided in the irradiation region 200A. Furthermore, it is desirable that a plurality of small irradiation regions like the upper-right small irradiation regions 26A to 26C be provided in the irradiation region 200A. The reason is described below. Hereunder, a description is given with respect to the lower-right small irradiation regions 25A to 25C when the leaning vehicle 1A is turning left.

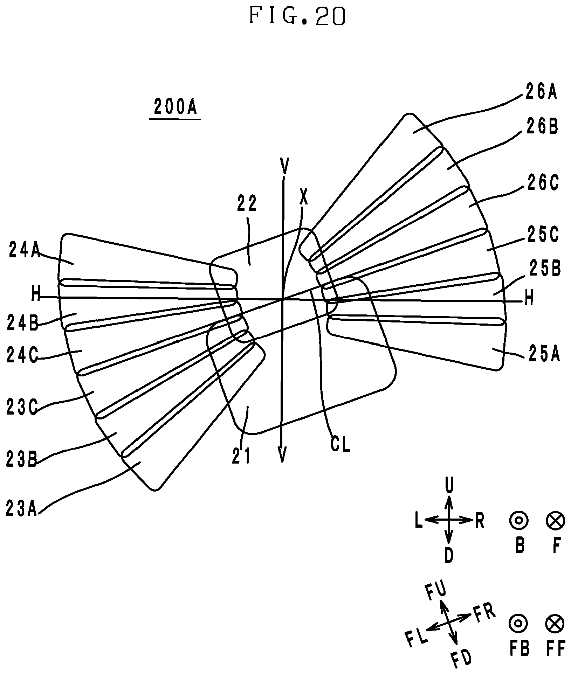

FIG. 20 is a view illustrating the irradiation region 200A of the leaning vehicle 1A. The vehicle body 6 illustrated in FIG. 20 is leaning to the left L more than the vehicle body 6 illustrated in FIG. 19. As illustrated in FIG. 20, when the vehicle body 6 leans in the leftward direction L by a large amount, a portion of the lower-right small irradiation region 25B that is formed below FD the lower-right small irradiation region 25C is located above U the reference top-end-passing straight line H-H. In this case, as described above, in some cases the lower-right small irradiation region 25B may impart a sensation of discomfort that is caused by a glare to the driver of a preceding vehicle or an oncoming vehicle. Therefore, the controller 51 performs control so that the lower-right small irradiation regions 25C and 25B enter a dimmed state or a non-irradiation state.

On the other hand, in FIG. 20, because the lower-right small irradiation region 25A that is located below FD the lower-right small irradiation region 25B is formed further downward D than the reference top-end-passing straight line H-H, the possibility that the lower-right small irradiation region 25A will impart a sensation of discomfort that is caused by a glare to the driver of a preceding vehicle or an oncoming vehicle is low. Therefore, the controller 51 does not perform control to that the lower-right small irradiation region 25A enters a dimmed state or a non-irradiation state. By this means, because the lower-right small irradiation region 25A is formed even when the absolute value of the leaning angle θ of the vehicle body 6 is large, a wide area in the direction of travel of the leaning vehicle 1 can be illuminated.

In short, in a case where the headlight unit 10A forms the lower-right small irradiation regions 25A to 25C, the lower-right small irradiation regions 25A to 25C can be controlled so as to enter a dimmed state or a non-irradiation state in stages in accordance with the absolute value of the leaning angle θ to the left L of the vehicle body 6. Therefore, even when the absolute value of the leaning angle θ of the leaning vehicle 1A is large, a wide area in the direction of travel of the leaning vehicle 1A can be illuminated.

### (Other Embodiments)

Note that, in the leaning-vehicle headlight apparatus 8, the controller 51 executes the lower-left small irradiation region dimming/non-irradiation control, the lower-right small irradiation region dimming/non-irradiation control, the upper-left small irradiation region dimming/non-irradiation control or the upper-right small irradiation region dimming/non-irradiation control in accordance with the irradiation region determination table shown in Table 1. However, the way in which the controller 51 executes the lower-left small irradiation region dimming/non-irradiation control, the lower-right small irradiation region dimming/non-irradiation control, the upper-left small irradiation region dimming/non-irradiation control or the upper-right small irradiation region dimming/non-irradiation control is not limited to a method that controls in accordance with the irradiation region determination table shown in Table 1. In a case where the vehicle body 6 leans in either the leftward direction L or the rightward direction R in the entire-small-irradiation-region irradiation state, the leaning-vehicle headlight apparatus 8 has only to execute at least one of the lower-left small irradiation region dimming/non-irradiation control, the lower-right small irradiation region dimming/non-irradiation control, the upper-left small irradiation region dimming/non-irradiation control and the upper-right small irradiation region dimming/non-irradiation control without an operation being performed by the rider. Further, similarly to the leaning-vehicle headlight apparatus 8, in a case where the vehicle body 6 leans in either the leftward direction L or the rightward direction R in the entire-small-irradiation-region irradiation state, the leaning-vehicle headlight apparatus 8A has only to execute at least one of the lower-left small irradiation region dimming/non-irradiation control, the lower-right small irradiation region dimming/non-irradiation control, the upper-left small irradiation region dimming/non-irradiation control and the upper-right small irradiation region dimming/non-irradiation control without an operation being performed by the rider.

In the headlight apparatuses for a leaning vehicle 8 and 8A, the controller 51 controls the lower-left light emitting diode 13 so as to enter a dimmed state or an extinguished state from a lit state in order to execute the lower-left small irradiation region dimming/non-irradiation control. However, in the headlight apparatuses for a leaning vehicle 8 and 8A, a method for executing the lower-left small irradiation region dimming/non-irradiation control is not limited thereto. For example, the headlight apparatuses for a leaning vehicle 8 and 8A may include a shade and a shade driving mechanism. The shade driving mechanism moves the shade so as to switch between a non-light blocking state in which the shade is not positioned in front of the lower-left light emitting diode 13, and a semi-light blocking/light blocking state in which the shade is located in front F of the lower-left light emitting diode 13. In the non-light blocking state, light that the lower-left light emitting diode 13 radiated is not blocked by the shade and irradiates the lower-left small irradiation region. In the semi-light blocking/light blocking state, light that the lower-left light emitting diode 13 radiated is blocked by the shade, and does not irradiate the lower-left small irradiation region. Note that, in the semi-light blocking/light blocking state, the shade may transmit a part of the light that the lower-left light emitting diode 13 radiates. The amount of light that is radiated to the lower-left small irradiation region 23 in the semi-light blocking/light blocking state is less than the amount of light that is radiated to the lower-left small irradiation region 23 in the non-light blocking state. Note that, the upper-left small irradiation region dimming/non-irradiation control, the lower-right small irradiation region dimming/non-irradiation control and the upper-right small irradiation region dimming/non-irradiation control may also by executed by means of a shade and a shade driving mechanism similarly to the lower-left small irradiation region dimming/non-irradiation control.

Further, in the headlight apparatuses for a leaning vehicle 8 and 8A, even in the case of a state in which the vehicle body 6 is upright, when a preceding vehicle or an oncoming vehicle is present the controller 51 may execute the upper-left small irradiation region dimming/non-irradiation control or the upper-right small irradiation region dimming/non-irradiation control in the matrix mode.

Further, in the headlight apparatuses for a leaning vehicle 8 and 8A, in a case where the control mode is the matrix mode, the controller 51 executes the lower-left small irradiation region dimming/non-irradiation control, the upper-left small irradiation region dimming/non-irradiation control, the lower-right small irradiation region dimming/non-irradiation control and the upper-right small irradiation region dimming/non-irradiation control in the entire-small-irradiation-region irradiation state without an operation being performed by a rider. However, in the headlight apparatuses for a leaning vehicle 8 and 8A, the irradiation region 200 or 200A may enter the entire-small-irradiation-region irradiation state in a control mode other than the matrix mode (hereunder, referred to as "quasi-matrix mode"). In the headlight apparatuses for a leaning vehicle 8 and 8A, in a case where the control mode is the quasi-matrix mode, the controller 51 may execute the lower-left small irradiation region dimming/non-irradiation control, the upper-left small irradiation region dimming/non-irradiation control, the lower-right small irradiation region dimming/non-irradiation control and the upper-right small irradiation region dimming/non-irradiation control in the entire-small-irradiation-region irradiation state when an operation is performed by the rider.

In this specification the term "control without an operation being performed by the rider" means control that is triggered by the vehicle body 6 leaning to either the left L or the right R. Accordingly, the term "operation being performed by the rider" in the term "control without an operation being performed by the rider" does not include an operation in which the rider switches the control mode to the matrix mode, quasi-matrix mode or normal mode.

Further, in the headlight apparatuses for a leaning vehicle 8 and 8A, when the control mode is the matrix mode, the controller 51 may control a light emitting diode which is being controlled in a dimmed state or an extinguished state to forcedly enter a lit state in accordance with an operation by the rider.

Further, the light sources of the headlight units 10 and 10A are light emitting diodes. However, the light sources of the headlight units 10 and 10A are not limited to light emitting diodes. The light sources of the headlight units 10 and 10A may be semiconductor lasers, HID (high-intensity discharge) bulbs, halogen lamps, incandescent light bulbs or the like. However, it is desirable that the light sources of the headlight units be light emitting diodes or semiconductor light sources such as semiconductor lasers.

Further, in the headlight apparatuses for a leaning vehicle 8 and 8A, the photodetector camera 54 is a detection device that detects a preceding vehicle or an oncoming vehicle. However, the detection device is not limited to the photodetector camera 54. The detection device may be a light sensor.

Furthermore, the headlight apparatuses for a leaning vehicle 8 and 8A may include a light sensor instead of the photodetector camera 54. In such case, the control device 9 or 9A calculates the leaning angle θ of the vehicle body 6 and also detects a preceding vehicle or an oncoming vehicle based on a signal that is output from the photodetector camera 54. The memory 55 of the controller 51 stores in advance the irradiation regions 200 and 200A that are to be controlled to enter a dimmed state or a non-irradiation state when the light sensor detects a preceding vehicle or an oncoming vehicle.

Note that, according to the leaning-vehicle headlight apparatus 8, the ECU 50 calculates the leaning angle θ of the vehicle body 6 and also detects a preceding vehicle or an oncoming vehicle based on a video signal that is output from the photodetector camera 54. Further, according to the leaning-vehicle headlight apparatus 8A, the ECU 50 calculates the leaning angle θ based on the angular velocity of the vehicle body 6 that the leaning angle sensor 52 has detected and the speed of the vehicle body 6 that the speed sensor 53 has detected. In addition, according to the leaning-vehicle headlight apparatus 8A, the ECU 50 detects a preceding vehicle or an oncoming vehicle based on a video signal that is output from the photodetector camera 54. However, for the headlight apparatuses for a leaning vehicle 8 and 8A, a method of calculating the leaning angle θ and a method of detecting a preceding vehicle or an oncoming vehicle are not limited to the aforementioned methods. The leaning angle θ may be detected, for example, by an angle sensor of an IMU (inertial measurement unit). In this case, the angle sensor of the IMU can detect the leaning angle θ without using the angular velocity and speed of the vehicle body 6.

Further, the headlight apparatuses for a leaning vehicle 8 and 8A may include the leaning angle sensor 52 and a mode changeover switch. The headlight apparatuses for a leaning vehicle 8 and 8A can operate in the normal mode and the matrix mode. The normal mode includes a high-beam mode and a low-beam mode. That is, the headlight apparatuses for a leaning vehicle 8 and 8A can operate in three kinds of control modes, namely, the high-beam mode, the low-beam mode and the matrix mode. In the high-beam mode, light is radiated to the lower-center irradiation region 21 and the upper-center irradiation region 22 by the lower-center light emitting diodes 11 and the upper-center light emitting diodes 12. In the low-beam mode, light is radiated to the lower-center irradiation region 21 by the lower-center light emitting diodes 11. In the matrix mode, in a state in which the vehicle body 6 is upright, light is radiated to the lower-center irradiation region 21, the upper-center irradiation region 22, the lower-left small irradiation region 23, the upper-left small irradiation region 24, the lower-right small irradiation region 25 and the upper-right small irradiation region 26 by the lower-center light emitting diodes 11, the upper-center light emitting diodes 12, the lower-left light emitting diode 13, the upper-left light emitting diode 14, the lower-right light emitting diode 15 and the upper-right light emitting diode 16. Further, in the matrix mode, in a state in which the vehicle body 6 leans in the leftward direction L or right direction R, at least one of the following operations (a) to (d) is executed:
(a) Light is not radiated to the lower-left small irradiation region 23 by the lower-left light emitting diode 13.
(b) Light is not radiated to the upper-left small irradiation region 24 by the upper-left light emitting diode 14.
(c) Light is not radiated to the lower-right small irradiation region 25 by the lower-right light emitting diode 15.
(d) Light is not radiated to the upper-right small irradiation region 26 by the upper-right light emitting diode 16.

The rider can change over the control mode to the high-beam mode, low-beam mode or matrix mode by operating the mode changeover switch. However, changing over of the control mode may also be performed automatically without depending on a manual operation by the rider.

The headlight apparatuses for a leaning vehicle 8 and 8A may also include an environmental brightness sensor. The environmental brightness sensor detects the brightness in the environment around the leaning vehicle. The information which the environmental brightness sensor detects is output to the control device 9 or 9A. Based on the information from the environmental brightness sensor, the control device 9 or 9A performs control so that an irradiation region of low necessity enters a dimmed state or a non-irradiation state from a lit state.

Further, the headlight apparatuses for a leaning vehicle 8 and 8A may include a weather sensor. The weather sensor detects the weather in the environment around the leaning vehicle 1 or 1A. Based on information from the weather sensor, the control device 9 or 9A performs control so that an irradiation region of low necessity enters a dimmed state or a non-irradiation state from a lit state.

The headlight apparatuses for a leaning vehicle 8 and 8A may also include a road surface state sensor. The road surface state sensor detects various information regarding the road surface on which the leaning vehicle 1 or 1A is travelling. The information regarding the road surface is, for example, information regarding the light reflectance of the road surface or the like. Based on information from the road surface state sensor, the control device 9 or 9A performs control so that an irradiation region of low necessity enters a dimmed state or a non-irradiation state from a lit state.

Furthermore, a mobile terminal may detect information regarding the environment around the leaning vehicle 1 or 1A that is described above. The mobile terminal is, for example, a smartphone. Various kinds of information that the mobile terminal detects is output to the control device 9 or 9A of the leaning vehicle 1 or 1A. Based on the information from the mobile terminal, the control device 9 or 9A performs control so that an irradiation region of low necessity enters a dimmed state or a non-irradiation state from a lit state.

The headlight units 10 and 10A include the two lower-center light emitting diodes 11. However, the number of lower-center light emitting diodes is not limited to two. The headlight units 10 and 10A may include one lower-center light emitting diode 11 or may include three or more lower-center light emitting diodes 11. The number of the upper-center light emitting diodes 12 also may be one or may be three or more.

Further, the headlight unit 10A includes three lower-left light emitting diodes 13A to 13C. However, the number of lower-left light emitting diodes is not limited to three. The number of the lower-left light emitting diodes may be one or two, or may be four or more. The number of the upper-left light emitting diodes, the lower-right light emitting diodes, and the upper-right light emitting diode may also be one or two, or may be four or more, respectively.

Further, in the leaning-vehicle headlight apparatus 8A, the lower-left light emitting diodes 13A to 13C are disposed so as to be aligned in the up-down direction FUD. However, the arrangement of the lower-left light emitting diodes 13A to 13C is not limited to an arrangement in which the lower-left light emitting diodes 13A to 13C are disposed so as to be aligned in the up-down direction FUD. The lower-left light emitting diodes 13A to 13C may be disposed so as to be aligned in the left-right direction FLR. Further, in a case where four or more of the lower-left light emitting diodes are provided, the lower-left light emitting diodes may be disposed in a matrix shape in which the lower-left light emitting diodes are aligned in the up-down direction FUD and the left-right direction FLR. Note that, the manner in which the lower-left light emitting diodes 13A to 13C may be disposed similarly applies with respect to the upper-left light emitting diodes 14A to 14C, the lower-right light emitting diodes 15A to 15C and the upper-right light emitting diodes 16A to 16C.

Furthermore, in the leaning-vehicle headlight apparatus 8A, the lower-left small irradiation regions 23A to 23C are disposed so as to be aligned in the up-down direction FUD. However, the arrangement of the lower-left small irradiation regions 23A to 23C is not limited to an arrangement in which the lower-left small irradiation regions 23A to 23C are disposed so as to be aligned in the up-down direction FUD. The lower-left small irradiation regions 23A to 23C may also be disposed so as to be aligned in the left-right direction FLR. Further, in a case where four or more of the lower-left small irradiation regions are provided, the lower-left small irradiation regions may be disposed in a matrix shape in which the lower-left small irradiation regions are aligned in the up-down direction FUD and the left-right direction FLR. The manner in which the lower-left small irradiation regions 23A to 23C may be disposed similarly applies with respect to the upper-left small irradiation regions 24A to 24C, the lower-right small irradiation regions 25A to 25C and the upper-right small irradiation regions 26A to 26C.

In the headlight apparatuses for a leaning vehicle 8 and 8A, the shape of the lower-center irradiation region 21 and the upper-center irradiation region 22 is a rectangular shape having four corners that have been subjected to chamfering. However, the shape of the lower-center irradiation region 21 and the upper-center irradiation region 22 is not limited to a rectangular shape. The lower-center irradiation region 21 and the upper-center irradiation region 22 may be a quadrangular shape other than a rectangular shape, or may be a polygonal shape, a circle, or an ellipse or the like.

Further, in the headlight apparatuses for a leaning vehicle 8 and 8A, the shape of each of the lower-left small irradiation regions 23 and 23A to 23C is a fan shape. However, the shape of the lower-left small irradiation regions 23 and 23A to 23C is not limited to a fan shape. The shape of each of the lower-left small irradiation regions 23 and 23A to 23C may also be a polygonal shape, a circle, an ellipse or the like. The situation regarding the shape of the lower-left small irradiation regions 23A to 23C similarly applies with respect to the upper-left small irradiation regions 24 and 24A to 24C, the lower-right small irradiation regions 25 and 25A to 25C, and the upper-right small irradiation regions 26 and 26A to 26C.

In the headlight apparatuses for a leaning vehicle 8 and 8A, the lower-left inner lenses 43 and 43A to 43C, the upper-left inner lenses 44 and 44A to 44C, the lower-right inner lenses 45 and 45A to 45C, the upper-right inner lenses 46 and 46A to 46C, and the outer lens 47 are provided in the headlight units 10 and 10A. However, the configuration of the headlight units 10 and 10A is not limited to such a configuration. The headlight units 10 and 10A need not include the lower-left inner lenses 43 and 43A to 43C, the upper-left inner lenses 44 and 44A to 44C, the lower-right inner lenses 45 and 45A to 45C, the upper-right inner lenses 46 and 46A to 46C, and the outer lens 47. Further, the headlight units 10 and 10A may include another member such as a reflector. In short, the headlight units 10 and 10A can be applied to various kinds of headlight units, such as a monofocal-type, a parabolic-type or a projector-type headlight unit.

Further, in the leaning-vehicle headlight apparatus 8, the lower-left small irradiation region 23 and the lower-right small irradiation region 25 need not be disposed in linear symmetry with respect to the imaginary vertical line V-V. In the leaning-vehicle headlight apparatus 8A, the lower-left small irradiation regions 23A to 23C and the lower-right small irradiation regions 25A to 25C need not be disposed in linear symmetry with respect to the imaginary vertical line V-V. Further, in the leaning-vehicle headlight apparatus 8, the upper-left small irradiation region 24 and the upper-right small irradiation region 26 need not be disposed in linear symmetry with respect to the imaginary vertical line V-V. In the leaning-vehicle headlight apparatus 8A, the upper-left small irradiation regions 24A to 24C and the upper-right small irradiation regions 26A to 26C need not be disposed in linear symmetry with respect to the imaginary vertical line V-V.

Note that, in the headlight apparatuses for a leaning vehicle 8 and 8A, the controller 51 need not execute the upper-left small irradiation region dimming/non-irradiation control in a case where the vehicle body 6 leans in the leftward direction L in the entire-small-irradiation-region irradiation state, irrespective of the presence or absence of a preceding vehicle or an oncoming vehicle. Further, the controller 51 need not execute the upper-left small irradiation region dimming/non-irradiation control in a case where the vehicle body 6 leans in the rightward direction R in the entire-small-irradiation-region irradiation state, irrespective of the presence or absence of a preceding vehicle or an oncoming vehicle. In this case, the photodetector camera 54 is not necessary.

The leaning vehicle 1 or 1A is not limited to a motorcycle. The leaning vehicle 1 or 1A may be, for example, a motor tricycle or an ATV (all terrain vehicle). Accordingly, the leaning vehicle 1 or 1A may include two or more of the front wheels 2, and may include two or more of the rear wheels 7. The leaning vehicle 1 or 1A may only need to be a straddled vehicle that turns to the left L or right R in a state in which the vehicle body 6 leans in the leftward direction L or rightward direction R.

Terms and expressions used in this specification are used for the purpose of description, and are not used for the purpose of limiting interpretation. Any feature equivalent to a characteristic feature disclosed and described in this specification is not excluded, and it should be recognized that the present invention is defined in the appended claims.

The embodiments described above are described in order to facilitate understanding of the present invention, and do not limit the present invention.

The present invention can be embodied by a large number of different modes. The embodiments are described in this specification with the understanding that the embodiments do not intend to limit the present invention to preferable embodiments described and/or illustrated in this specification.

The embodiments should be construed as non-exclusive. For example, in this specification the terms "preferably" and "may" are non-exclusive, and mean "preferable, but not limited to this" and "may be, but not limited to this".

### REFERENCE SIGNS LIST

1, 1A: Leaning Vehicle
2: Front Wheel
3: Front Fork
4: Front Fender
5: Front Cowl
6: Vehicle Body
7: Rear Wheel
8, 8A: Leaning-vehicle headlight apparatus
9, 9A: Control Device
10, 10A: Headlight Unit
11: Lower-center Light Emitting Diode
12: Upper-center Light Emitting Diode
13, 13A to 13C: Lower-left Light Emitting Diode
14, 14A to 14C: Upper-left Light Emitting Diode
15, 15A to 15C: Lower-right Light Emitting Diode
16, 16A to 16C: Upper-right Light Emitting Diode
21: Lower-center Irradiation Region
22: Upper-center Irradiation Region
23, 23A to 23C: Lower-left Small Irradiation Region
24, 24A to 24C: Upper-left Small Irradiation Region
25, 25A to 25C: Lower-right Small Irradiation Region
26, 26A to 26C: Upper-right Small Irradiation Region
30: Control Board
41: Lower-center Inner Lens
42: Upper-center Inner Lens
43, 43A to 43C: Lower-left Inner Lens
44, 44A to 44C: Upper-left Inner Lens
45, 45A to 45C: Lower-right Inner Lens
46, 46A to 46C: Upper-right Inner Lens
47: Outer Lens
50: ECU
51: Controller
52: Leaning Angle Sensor
53: Speed Sensor
54: Photodetector Camera
55: Memory
61: Housing
62: Outer Cover
63: Headlight Chamber
200, 200A, 200a, 200b: Irradiation Region
Ax1: Vertical Axis
Ax2: Center Line
CL: Top-end-passing Straight Line

## Claims

1. A leaning-vehicle headlight apparatus (8, 8A) for a leaning vehicle (1, 1A) having a vehicle body (6) configured to lean in a leaning-vehicle leftward direction when turning left and to lean in a leaning-vehicle rightward direction when turning right, the leaning-vehicle headlight apparatus (8, 8A) comprising:
a headlight unit (10, 10A) that includes: a lower-center light source (11) configured to radiate, in a vehicle-body frontward direction, light that forms a lower-center irradiation region (21); an upper-center light source (12) configured to radiate, in the vehicle-body frontward direction, light that forms an upper-center irradiation region (22) that is disposed above the lower-center irradiation region (21) in a vehicle-body upward direction; a lower-left light source (13, 13A to 13C) configured to radiate, in the vehicle-body frontward direction, light that forms a lower-left small irradiation region (23, 23A to 23C) that is disposed to the left of the lower-center irradiation region (21) in a vehicle-body leftward direction; a lower-right light source (15, 15A to 15C) configured to radiate, in the vehicle-body frontward direction, light that forms a lower-right small irradiation region (25, 25A to 25C) that is disposed to the right of the lower-center irradiation region (21) in a vehicle-body rightward direction; an upper-left light source (14, 14A to 14C) configured to radiate, in the vehicle-body frontward direction, light that forms an upper-left small irradiation region (24, 24A to 24C) that is disposed to the left of the upper-center irradiation region (22) in the vehicle-body leftward direction and is disposed above the lower-left small irradiation region (23, 23A to 23C) in the vehicle-body upward direction; and an upper-right light source (16, 16A to 16C) configured to radiate, in the vehicle-body frontward direction, light that forms an upper-right small irradiation region (26, 26A to 26C) that is disposed to the right of the upper-center irradiation region (22) in the vehicle-body rightward direction and is disposed above the lower-right small irradiation region (25, 25A to 25C) in the vehicle-body upward direction; and
a control device (9, 9A) which is configured to, without an operation being performed by a rider, in a case where the vehicle body (6) leans in either the leaning-vehicle leftward or rightward direction in an entire-small-irradiation-region irradiation state in which light is being radiated to all of the lower-center irradiation region (21) that is formed by light that the lower-center light source (11) radiates, the upper-center irradiation region (22) that is formed by light that the upper-center light source (12) radiates, the lower-left small irradiation region (23, 23A to 23C) that is formed by light that the lower-left light source (13, 13A to 13C) radiates, the lower-right small irradiation region (25, 25A to 25C) that is formed by light that the lower-right light source (15, 15A to 15C) radiates, the upper-left small irradiation region (24, 24A to 24C) that is formed by light that the upper-left light source (14, 14A to 14C) radiates, and the upper-right small irradiation region (26, 26A to 26C) that is formed by light that the upper-right light source (16, 16A to 16C) radiates, execute at least one of: lower-left small irradiation region dimming/non-irradiation control that controls so that the lower-left small irradiation region (23, 23A to 23C) enters a dimmed state in which an amount of light that is radiated to the lower-left small irradiation region (23, 23A to 23C) by the lower-left light source (13, 13A to 13C) is decreased relative to an amount of light that is radiated to the lower-left small irradiation region (23, 23A to 23C) by the lower-left light source (13, 13A to 13C) in the entire-small-irradiation-region irradiation state, or enters a non-irradiation state in which light is not radiated to the lower-left small irradiation region (23, 23A to 23C) by the lower-left light source (13, 13A to 13C); lower-right small irradiation region dimming/non-irradiation control that controls so that the lower-right small irradiation region (25, 25A to 25C) enters a dimmed state in which an amount of light that is radiated to the lower-right small irradiation region (25, 25A to 25C) by the lower-right light source (15, 15A to 15C) is decreased relative to an amount of light that is radiated to the lower-right small irradiation region (25, 25A to 25C) by the lower-right light source (15, 15A to 15C) in the entire-small-irradiation-region irradiation state, or enters a non-irradiation state in which light is not radiated to the lower-right small irradiation region (25, 25A to 25C) by the lower-right light source (15, 15A to 15C); upper-left small irradiation region dimming/non-irradiation control that controls so that the upper-left small irradiation region (24, 24A to 24C) enters a dimmed state in which an amount of light that is radiated to the upper-left small irradiation region (24, 24A to 24C) by the upper-left light source (14, 14A to 14C) is decreased relative to an amount of light that is radiated to the upper-left small irradiation region (24, 24A to 24C) by the upper-left light source (14, 14A to 14C) in the entire-small-irradiation-region irradiation state, or enters a non-irradiation state in which light is not radiated to the upper-left small irradiation region (24, 24A to 24C) by the upper-left light source (14, 14A to 14C); and upper-right small irradiation region dimming/non-irradiation control that controls so that the upper-right small irradiation region (26, 26A to 26C) enters a dimmed state in which an amount of light that is radiated to the upper-right small irradiation region (26, 26A to 26C) by the upper-right light source (16, 16A to 16C) is decreased relative to an amount of light that is radiated to the upper-right small irradiation region (26, 26A to 26C) by the upper-right light source (16, 16A to 16C) in the entire-small-irradiation-region irradiation state, or enters a non-irradiation state in which light is not radiated to the upper-right small irradiation region (26, 26A to 26C) by the upper-right light source (16, 16A to 16C),
the control device (9, 9A) is configured to, in a case where the vehicle body (6) leans in either the leaning-vehicle leftward or rightward direction in the entire-small-irradiation-region irradiation state, execute at least one of the upper-left small irradiation region dimming/non-irradiation control and the upper-right small irradiation region dimming/non-irradiation control.

2. The leaning-vehicle headlight apparatus (8, 8A) according to claim 1, wherein the control device (9, 9A) is configured to:
execute the lower-left small irradiation region dimming/non-irradiation control in a case where the vehicle body (6) leans in the leaning-vehicle leftward direction in the entire-small-irradiation-region irradiation state, and
execute the lower-right small irradiation region dimming/non-irradiation control in a case where the vehicle body (6) leans in the leaning-vehicle rightward direction in the entire-small-irradiation-region irradiation state.

3. The leaning-vehicle headlight apparatus (8, 8A) according to claim 1 or claim 2, wherein the control device (9, 9A) is configured to:
not execute the upper-left small irradiation region dimming/non-irradiation control in a case where the vehicle body (6) leans in the leaning-vehicle leftward direction in the entire-small-irradiation-region irradiation state, and
not execute the upper-right small irradiation region dimming/non-irradiation control in a case where the vehicle body (6) leans in the leaning-vehicle rightward direction in the entire-small-irradiation-region irradiation state.

4. The leaning-vehicle headlight apparatus (8, 8A) according to any one of claim 1 to claim 3, wherein:
a plurality of the lower-left light sources (13A to 13C) is disposed so as to be aligned in the vehicle-body up-down direction;
a plurality of the lower-right light sources (15A to 15C) is disposed so as to be aligned in the vehicle-body up-down direction;
a plurality of the upper-left light sources (14A to 14C) is disposed so as to be aligned in the vehicle-body up-down direction;
a plurality of the upper-right light sources (16A to 16C) is disposed so as to be aligned in the vehicle-body up-down direction;
a plurality of the lower-left small irradiation regions (23A to 23C) is formed by irradiation of light by the plurality of lower-left light sources (13A to 13C), and is arranged so as to be aligned in the vehicle-body up-down direction;
a plurality of the lower-right small irradiation regions (25A to 25C) is formed by irradiation of light by the plurality of lower-right light sources (15A to 15C), and is arranged so as to be aligned in the vehicle-body up-down direction;
a plurality of the upper-left small irradiation regions (24A to 24C) is formed by irradiation of light by the plurality of upper-left light sources (14A to 14C), and is arranged so as to be aligned in the vehicle-body up-down direction; and
a plurality of the upper-right small irradiation regions (26A to 26C) is formed by irradiation of light by the plurality of upper-right light sources (16A to 16C), and is arranged so as to be aligned in the vehicle-body up-down direction.

5. The leaning-vehicle headlight apparatus (8, 8A) according to claim 4, wherein:
a total of the number of the plurality of lower-left small irradiation regions (23A to 23C) and the number of the plurality of upper-left small irradiation regions (24A to 24C) is greater than a total of the number of the lower-center irradiation regions (21) and the number of the upper-center irradiation regions (22); and
a total of the number of the plurality of lower-right small irradiation regions (25A to 25C) and the number of the plurality of upper-right small irradiation regions (26A to 26C) is greater than a total of the number of the lower-center irradiation regions (21) and the number of the upper-center irradiation regions (22).

6. The leaning-vehicle headlight apparatus (8, 8A) according to any one of claim 1 to claim 5, wherein:
an irradiation region is formed by light being radiated to at least one of the lower-center irradiation region (21), the upper-center irradiation region (22), the lower-left small irradiation region (23, 23A to 23C), the upper-left small irradiation region (24, 24A to 24C), the lower-right small irradiation region (25, 25A to 25C) and the upper-right small irradiation region (26, 26A to 26C); and,
the lower-right small irradiation region (25, 25A to 25C) is disposed in linear symmetry with the lower-left small irradiation region (23, 23A to 23C), and the upper-right small irradiation region (26, 26A to 26C) is disposed in linear symmetry with the upper-left small irradiation region (24, 24A to 24C) with respect to a straight line that intersects with a central axis of the irradiation region in the entire-small-irradiation-region irradiation state which extends in a vehicle-body front-back direction, and that extends in a leaning-vehicle up-down direction.

7. A leaning vehicle (1, 1A), comprising:
a vehicle body (6) configured to leans in the leaning-vehicle leftward direction when turning left and leans in the leaning-vehicle rightward direction when turning right; and
the leaning-vehicle headlight apparatus (8, 8A) according to any one of claim 1 to claim 6.

## Patentansprüche

1. Eine Neigungsfahrzeug-Scheinwerfervorrichtung (8, 8A) für ein Neigungsfahrzeug (1, 1A), das einen Fahrzeugkörper (6) aufweist, der dazu konfiguriert ist, sich beim Linksabbiegen in einer Neigungsfahrzeug-Linksrichtung zu neigen und sich beim Rechtsabbiegen in einer Neigungsfahrzeug-Rechtsrichtung zu neigen, wobei die Neigungsfahrzeug-Scheinwerfervorrichtung (8, 8A) folgende Merkmale aufweist:
eine Scheinwerfereinheit (10, 10A), die folgende Merkmale umfasst: eine Untere-Mitte-Lichtquelle (11), die dazu konfiguriert ist, in einer Fahrzeugkörper-Vorwärtsrichtung Licht abzustrahlen, das eine Untere-Mitte-Bestrahlungsregion (21) bildet; eine Obere-Mitte-Lichtquelle (12), die dazu konfiguriert ist, in der Fahrzeugkörper-Vorwärtsrichtung Licht abzustrahlen, das eine Obere-Mitte-Bestrahlungsregion (22) bildet, die in einer Fahrzeugkörper-Aufwärtsrichtung über der Untere-Mitte-Bestrahlungsregion (21) angeordnet ist; eine untere linke Lichtquelle (13, 13A bis 13C), die dazu konfiguriert ist, in der Fahrzeugkörper-Vorwärtsrichtung Licht abzustrahlen, das eine untere linke kleine Bestrahlungsregion (23, 23A bis 23C) bildet, die in einer Fahrzeugkörper-Linksrichtung links von der Untere-Mitte-Bestrahlungsregion (21) angeordnet ist; eine untere rechte Lichtquelle (15, 15A bis 15C), die dazu konfiguriert ist, in der Fahrzeugkörper-Vorwärtsrichtung Licht abzustrahlen, das eine untere rechte kleine Bestrahlungsregion (25, 25A bis 25C) bildet, die in einer Fahrzeugkörper-Rechtsrichtung rechts von der Untere-Mitte-Bestrahlungsregion (21) angeordnet ist; eine obere linke Lichtquelle (14, 14A bis 14C), die dazu konfiguriert ist, in der Fahrzeugkörper-Vorwärtsrichtung Licht abzustrahlen, das eine obere linke kleine Bestrahlungsregion (24, 24A bis 24C) bildet, die in der Fahrzeugkörper-Linksrichtung links von der Obere-Mitte-Bestrahlungsregion (22) angeordnet ist und in der Fahrzeugkörper-Aufwärtsrichtung über der unteren linken kleinen Bestrahlungsregion (23, 23A bis 23C) angeordnet ist; und eine obere rechte Lichtquelle (16, 16A bis 16C), die dazu konfiguriert ist, in der Fahrzeugkörper-Vorwärtsrichtung Licht abzustrahlen, das eine obere rechte kleine Bestrahlungsregion (26, 26A bis 26C) bildet, die in der Fahrzeugkörper-Rechtsrichtung rechts von dem Obere-Mitte-Bestrahlungsregion (22) angeordnet ist und in der Fahrzeugkörper-Aufwärtsrichtung über der unteren rechten kleinen Bestrahlungsregion (25, 25A bis 25C) angeordnet ist; und
eine Steuervorrichtung (9, 9A), die dazu konfiguriert ist, ohne dass eine Betätigung durch einen Fahrer durchgeführt wird, in einem Fall, in dem der Fahrzeugkörper (6) sich entweder in der Neigungsfahrzeug-Linksrichtung oder in der Neigungsfahrzeug-Rechtsrichtung in einem Bestrahlungszustand einer gesamten kleinen Bestrahlungsregion neigt, in dem Licht auf alle der Folgenden abgestrahlt wird: auf die Untere-Mitte-Bestrahlungsregion (21), die durch Licht gebildet wird, das die Untere-Mitte-Lichtquelle (11) abstrahlt, die Obere-Mitte-Bestrahlungsregion (22), die durch Licht gebildet wird, das die Obere-Mitte-Lichtquelle (12) abstrahlt, die untere linke kleine Bestrahlungsregion (23, 23A bis 23C), die durch Licht gebildet wird, das die untere linke Lichtquelle (13, 13A bis 13C) abstrahlt, die untere rechte kleine Bestrahlungsregion (25, 25A bis 25C), die durch Licht gebildet wird, das die untere rechte Lichtquelle (15, 15A bis 15C) abstrahlt, die obere linke kleine Bestrahlungsregion (24, 24A bis 24C), die durch Licht gebildet wird, das die obere linke Lichtquelle (14, 14A bis 14C) abstrahlt, und die obere rechte kleine Bestrahlungsregion (26, 26A bis 26C), die durch Licht gebildet wird, das die obere rechte Lichtquelle (16, 16A bis 16C) abstrahlt, zumindest eines der Folgenden auszuführen: eine Dimmen/Nichtbestrahlung-Steuerung der unteren linken kleinen Bestrahlungsregion, die so steuert, dass die untere linke kleine Bestrahlungsregion (23, 23A bis 23C) in einen gedimmten Zustand eintritt, in dem eine Lichtmenge, die durch die untere linke Lichtquelle (13, 13A bis 13C) auf die untere linke kleine Bestrahlungsregion (23, 23A bis 23C) abgestrahlt wird, relativ zu einer Lichtmenge, die durch die untere linke Lichtquelle (13, 13A bis 13C) auf die untere linke kleine Bestrahlungsregion (23, 23A bis 23C) abgestrahlt wird, in dem Bestrahlungszustand der gesamten kleinen Bestrahlungsregion verringert wird, oder in einen Nichtbestrahlungszustand eintritt, in dem durch die untere linke Lichtquelle (13, 13A bis 13C) kein Licht auf die untere linke kleine Bestrahlungsregion (23, 23A bis 23C) abgestrahlt wird; eine Dimmen/Nichtbestrahlung-Steuerung der unteren rechten kleinen Bestrahlungsregion, die so steuert, dass die untere rechte kleine Bestrahlungsregion (25, 25A bis 25C) in einen gedimmten Zustand eintritt, in dem eine Lichtmenge, die durch die untere rechte Lichtquelle (15, 15A bis 15C) auf die untere rechte kleine Bestrahlungsregion (25, 25A bis 25C) abgestrahlt wird, relativ zu einer Lichtmenge, die durch die untere rechte Lichtquelle (15, 15A bis 15C) auf die untere rechte kleine Bestrahlungsregion (25, 25A bis 25C) abgestrahlt wird, in dem Bestrahlungszustand der gesamten kleinen Bestrahlungsregion verringert wird, oder in einen Nichtbestrahlungszustand eintritt, in dem durch die untere rechte Lichtquelle (15, 15A bis 15C) kein Licht auf die untere rechte kleine Bestrahlungsregion (25, 25A bis 25C) abgestrahlt wird; eine Dimmen/Nichtbestrahlung-Steuerung der oberen linken kleinen Bestrahlungsregion, die so steuert, dass die obere linke kleine Bestrahlungsregion (24, 24A bis 24C) in einen gedimmten Zustand eintritt, in dem eine Lichtmenge, die durch die obere linke Lichtquelle (14, 14A bis 14C) auf die obere linke kleine Bestrahlungsregion (24, 24A bis 24C) abgestrahlt wird, relativ zu einer Lichtmenge, die durch die obere linke Lichtquelle (14, 14A bis 14C) auf die obere linke kleine Bestrahlungsregion (24, 24A bis 24C) abgestrahlt wird, in dem Bestrahlungszustand der gesamten kleinen Bestrahlungsregion verringert wird, oder in einen Nichtbestrahlungszustand eintritt, in dem durch die obere linke Lichtquelle (14, 14A bis 14C) kein Licht auf die obere linke kleine Bestrahlungsregion (24, 24A bis 24C) abgestrahlt wird; und eine Dimmen/Nichtbestrahlung-Steuerung der oberen rechten kleinen Bestrahlungsregion, die so steuert, dass die obere rechte kleine Bestrahlungsregion (26, 26A bis 26C) in einen gedimmten Zustand eintritt, in dem eine Lichtmenge, die durch die obere rechte Lichtquelle (16, 16A bis 16C) auf die obere rechte kleine Bestrahlungsregion (26, 26A bis 26C) abgestrahlt wird, relativ zu einer Lichtmenge, die durch die obere rechte Lichtquelle (16, 16A bis 16C) auf die obere rechte kleine Bestrahlungsregion (26, 26A bis 26C) abgestrahlt wird, in dem Bestrahlungszustand der gesamten kleinen Bestrahlungsregion verringert wird, oder in einen Nichtbestrahlungszustand eintritt, in dem durch die obere rechte Lichtquelle (16, 16A bis 16C) kein Licht auf die obere rechte kleine Bestrahlungsregion (26, 26A bis 26C) abgestrahlt wird,
wobei die Steuervorrichtung (9, 9A) dazu konfiguriert ist, in einem Fall, in dem der Fahrzeugkörper (6) sich in dem Bestrahlungszustand der gesamten kleinen Bestrahlungsregion entweder in der Neigungsfahrzeug-Links- oder -Rechtsrichtung neigt, zumindest eine der Dimmen/Nichtbestrahlung-Steuerung der oberen linken kleinen Bestrahlungsregion und der Dimmen/Nichtbestrahlung-Steuerung der oberen rechten kleinen Bestrahlungsregion auszuführen.

2. Die Neigungsfahrzeug-Scheinwerfervorrichtung (8, 8A) gemäß Anspruch 1, wobei die Steuervorrichtung (9, 9A) zu Folgendem konfiguriert ist:
Ausführen der Dimmen/Nichtbestrahlung-Steuerung der unteren linken kleinen Bestrahlungsregion in einem Fall, in dem sich der Fahrzeugkörper (6) in dem Bestrahlungszustand der gesamten kleinen Bestrahlungsregion in der Neigungsfahrzeug-Linksrichtung neigt, und
Ausführen der Dimmen/Nichtbestrahlung-Steuerung der unteren rechten kleinen Bestrahlungsregion in einem Fall, in dem sich der Fahrzeugkörper (6) in dem Bestrahlungszustand der gesamten kleinen Bestrahlungsregion in der Neigungsfahrzeug-Rechtsrichtung neigt.

3. Die Neigungsfahrzeug-Scheinwerfervorrichtung (8, 8A) gemäß Anspruch 1 oder Anspruch 2, wobei die Steuervorrichtung (9, 9A) zu Folgendem konfiguriert ist:
Nicht-Ausführen der Dimmen/Nichtbestrahlung-Steuerung der oberen linken kleinen Bestrahlungsregion in einem Fall, in dem sich der Fahrzeugkörper (6) in dem Bestrahlungszustand der gesamten kleinen Bestrahlungsregion in der Neigungsfahrzeug-Linksrichtung neigt, und
Nicht-Ausführen der Dimmen/Nichtbestrahlung-Steuerung der unteren rechten kleinen Bestrahlungsregion in einem Fall, in dem sich der Fahrzeugkörper (6) in dem Bestrahlungszustand der gesamten kleinen Bestrahlungsregion in der Neigungsfahrzeug-Rechtsrichtung neigt.

4. Die Neigungsfahrzeug-Scheinwerfervorrichtung (8, 8A) gemäß einem der Ansprüche 1 bis 3, wobei:
eine Mehrzahl der unteren linken Lichtquellen (13A bis 13C) so angeordnet ist, dass dieselbe in der Fahrzeugkörper-Aufwärts-Abwärts-Richtung ausgerichtet ist;
eine Mehrzahl der unteren rechten Lichtquellen (15A bis 15C) so angeordnet ist, dass dieselbe in der Fahrzeugkörper-Aufwärts-Abwärts-Richtung ausgerichtet ist;
eine Mehrzahl der oberen linken Lichtquellen (14A bis 14C) so angeordnet ist, dass dieselbe in der Fahrzeugkörper-Aufwärts-Abwärts-Richtung ausgerichtet ist;
eine Mehrzahl der oberen rechten Lichtquellen (16A bis 16C) so angeordnet ist, dass dieselbe in der Fahrzeugkörper-Aufwärts-Abwärts-Richtung ausgerichtet ist;
eine Mehrzahl der unteren linken kleinen Bestrahlungsregionen (23A bis 23C) durch Bestrahlen von Licht durch die Mehrzahl von unteren linken Lichtquellen (13A bis 13C) gebildet ist und so angeordnet ist, dass dieselbe in der Fahrzeugkörper-Aufwärts-Abwärts-Richtung ausgerichtet ist;
eine Mehrzahl der unteren rechten kleinen Bestrahlungsregionen (25A bis 25C) durch Bestrahlen von Licht durch die Mehrzahl von unteren rechten Lichtquellen (15A bis 15C) gebildet ist und so angeordnet ist, dass dieselbe in der Fahrzeugkörper-Aufwärts-Abwärts-Richtung ausgerichtet ist;
eine Mehrzahl der oberen linken kleinen Bestrahlungsregionen (24A bis 24C) durch Bestrahlen von Licht durch die Mehrzahl von oberen linken Lichtquellen (14A bis 14C) gebildet ist und so angeordnet ist, dass dieselbe in der Fahrzeugkörper-Aufwärts-Abwärts-Richtung ausgerichtet ist; und
eine Mehrzahl der oberen rechten kleinen Bestrahlungsregionen (26A bis 26C) durch Bestrahlen von Licht durch die Mehrzahl von oberen rechten Lichtquellen (16A bis 16C) gebildet ist und so angeordnet ist, dass dieselbe in der Fahrzeugkörper-Aufwärts-Abwärts-Richtung ausgerichtet ist.

5. Die Neigungsfahrzeug-Scheinwerfervorrichtung (8, 8A) gemäß Anspruch 4, wobei:
eine Gesamtheit der Anzahl der Mehrzahl von unteren linken kleinen Bestrahlungsregionen (23A bis 23C) und der Anzahl der Mehrzahl von oberen linken kleinen Bestrahlungsregionen (24A bis 24C) größer ist als eine Gesamtheit der Anzahl der Untere-Mitte-Bestrahlungsregionen (21) und der Anzahl der Obere-Mitte-Bestrahlungsregionen (22); und
eine Gesamtheit der Anzahl der Mehrzahl von unteren rechten kleinen Bestrahlungsregionen (25A bis 25C) und der Anzahl der Mehrzahl von oberen rechten kleinen Bestrahlungsregionen (26A bis 26C) größer ist als eine Gesamtheit der Anzahl der Untere-Mitte-Bestrahlungsregionen (21) und der Anzahl der Obere-Mitte-Bestrahlungsregionen (22).

6. Die Neigungsfahrzeug-Scheinwerfervorrichtung (8, 8A) gemäß einem der Ansprüche 1 bis 5, wobei:
eine Bestrahlungsregion dadurch gebildet wird, dass Licht auf die Untere-Mitte-Bestrahlungsregion (21), die Obere-Mitte-Bestrahlungsregion (22), die untere linke kleine Bestrahlungsregion (23, 23A bis 23C), die obere linke kleine Bestrahlungsregion (24, 24A bis 24C), die untere rechte kleine Bestrahlungsregion (25, 25A bis 25C) und/oder die obere rechte kleine Bestrahlungsregion (26, 26A bis 26C) abgestrahlt wird; und
die untere rechte kleine Bestrahlungsregion (25, 25A bis 25C) in linearer Symmetrie mit der unteren linken kleinen Bestrahlungsregion (23, 23A bis 23C) angeordnet ist und die obere rechte kleine Bestrahlungsregion (26, 26A bis 26C) in linearer Symmetrie mit der oberen linken kleinen Bestrahlungsregion (24, 24A bis 24C) in Bezug auf eine gerade Linie angeordnet ist, die eine Mittelachse der Bestrahlungsregion in dem Bestrahlungszustand der gesamten kleinen Bestrahlungsregion schneidet, die sich in einer Fahrzeugkörper-Vorwärts-Rückwärts-Richtung erstreckt, und die sich in einer Neigungsfahrzeug-Aufwärts-Abwärts-Richtung erstreckt.

7. Ein Neigungsfahrzeug (1, 1A), das folgende Merkmale aufweist:
einen Fahrzeugkörper (6), der dazu konfiguriert ist, sich beim Linksabbiegen in der Neigungsfahrzeug-Linksrichtung zu neigen, und sich beim Rechtsabbiegen in der Neigungsfahrzeug-Rechtsrichtung zu neigen; und
die Neigungsfahrzeug-Scheinwerfervorrichtung (8, 8A) gemäß einem der Ansprüche 1 bis 6.

## Revendications

1. Appareil de phare de véhicule à inclinaison (8, 8A) pour un véhicule à inclinaison (1, 1A) présentant une carrosserie de véhicule (6) configurée pour s'incliner dans une direction vers la gauche du véhicule à inclinaison lors d'un virage à gauche et pour s'incliner dans une direction vers la droite du véhicule à inclinaison lors d'un virage à droite, l'appareil de phare de véhicule à inclinaison (8, 8A) comprenant :
une unité de phare (10, 10A) qui inclut : une source de lumière de centre inférieure (11) configurée pour rayonner, dans une direction vers l'avant de la carrosserie de véhicule, de la lumière qui forme une région de rayonnement de centre inférieure (21) ; une source de lumière de centre supérieure (12) configurée pour rayonner, dans la direction vers l'avant de la carrosserie de véhicule, une lumière qui forme une région de rayonnement de centre supérieure (22) qui est disposée au-dessus de la région de rayonnement de centre inférieure (21) dans une direction vers le haut de la carrosserie de véhicule ; une source de lumière gauche inférieure (13, 13A à 13C) configurée pour rayonner, dans la direction vers l'avant de la carrosserie de véhicule, une lumière qui forme une petite région de rayonnement gauche inférieure (23, 23A à 23C) qui est disposée à gauche de la région de rayonnement de centre inférieure (21) dans une direction vers la gauche de la carrosserie de véhicule ; une source de lumière droite inférieure (15, 15A à 15C) configurée pour rayonner, dans la direction vers l'avant de la carrosserie de véhicule, une lumière qui forme une petite région de rayonnement droite inférieure (25, 25A à 25C) qui est disposée à droite de la région de rayonnement de centre inférieure (21) dans une direction vers la droite de la carrosserie de véhicule ; une source de lumière gauche supérieure (14, 14A à 14C) configurée pour rayonner, dans la direction vers l'avant de la carrosserie de véhicule, une lumière qui forme une petite région de rayonnement gauche supérieure (24, 24A à 24C) qui est disposée à gauche de la région de rayonnement de centre supérieure (22) dans la direction vers la gauche de la carrosserie de véhicule et qui est disposée au-dessus de la petite région de rayonnement gauche inférieure (23, 23A à 23C) dans la direction vers le haut de la carrosserie de véhicule ; et une source de lumière droite supérieure (16, 16A à 16C) configurée pour rayonner, dans la direction vers l'avant de la carrosserie de véhicule, une lumière qui forme une petite région de rayonnement droite supérieure (26, 26A à 26C) qui est disposée à droite de la région de rayonnement de centre supérieure (22) dans la direction vers la droite de la carrosserie de véhicule et qui est disposée au-dessus de la petite région de rayonnement droite inférieure (25, 25A à 25C) dans la direction vers le haut de la carrosserie de véhicule ; et
un dispositif de commande (9, 9A) qui est configuré pour exécuter, sans qu'une opération ne soit effectuée par un conducteur, au cas où la carrosserie de véhicule (6) s'incline dans la direction d'inclinaison du véhicule soit vers la gauche, soit vers la droite dans un état de rayonnement de toute la petite région de rayonnement dans lequel de la lumière est rayonnée vers la totalité de la région de rayonnement de centre inférieure (21) qui est formée par la lumière que rayonne la source de lumière de centre inférieure (11), la région de rayonnement de centre supérieure (22) qui est formée par la lumière que rayonne la source de lumière de centre supérieure (12), la petite région de rayonnement gauche inférieure (23, 23A à 23C) qui est formée par la lumière que rayonne la source de lumière gauche inférieure (13, 13A à 13C), la petite région de rayonnement droite inférieure (25, 25A à 25C) qui est formée par la lumière que rayonne la source de lumière droite inférieure (15, 15A à 15C), la petite région de rayonnement gauche supérieure (24, 24A à 24C) qui est formée par la lumière que rayonne la source de lumière gauche supérieure (14, 14A à 14C), et la petite région de rayonnement droite supérieure (26, 26A à 26C) qui est formée par la lumière que rayonne la source de lumière droite supérieure (16, 16A à 16C), au moins l'une parmi : une commande d'obscurcissement/de non-rayonnement de la petite région de rayonnement gauche inférieure qui commande de sorte que la petite région de rayonnement gauche inférieure (23, 23A à 23C) entre dans un état obscurci dans lequel une quantité de lumière qui est rayonnée vers la petite région de rayonnement gauche inférieure (23, 23A à 23C) par la source de lumière gauche inférieure (13, 13A à 13C) est diminuée par rapport à une quantité de lumière rayonnée vers la petite région de rayonnement gauche inférieure (23, 23A à 23C) par la source de lumière gauche inférieure (13, 13A à 13C) dans l'état de rayonnement de la totalité de la petite région de rayonnement, ou entre dans un état de non-rayonnement dans lequel la lumière n'est pas rayonnée vers la petite région de rayonnement gauche inférieure (23, 23A à 23C) par la source de lumière gauche inférieure (13, 13A à 13C) ; une commande d'obscurcissement/de non-rayonnement de la petite région de rayonnement droite inférieure qui commande de sorte que la petite région de rayonnement droite inférieure (25, 25A à 25C) entre dans un état obscurci dans lequel une quantité de lumière qui est rayonnée vers la petite région de rayonnement droite inférieure (25, 25A à 25C) par la source de lumière droite inférieure (15, 15A à 15C) est diminuée par rapport à une quantité de lumière qui est rayonnée vers la petite région de rayonnement droite inférieure (25, 25A à 25C) par la source de lumière droite inférieure (15, 15A à 15C) dans l'état de rayonnement de la totalité de la petite région de rayonnement, ou entre dans un état de non-rayonnement dans lequel la lumière n'est pas rayonnée vers la petite région de rayonnement droite inférieure (25, 25A à 25C) par la source lumineuse droite inférieure (15, 15A à 15C) ; une commande d'obscurcissement/de non-rayonnement de la petite région de rayonnement gauche supérieure qui commande de sorte que la petite région de rayonnement gauche supérieure (24, 24A à 24C) entre dans un état obscurci dans lequel une quantité de lumière qui est rayonnée vers la petite région de rayonnement gauche supérieure (24, 24A à 24C) par la source de lumière gauche supérieure (14, 14A à 14C) est diminuée par rapport à une quantité de lumière qui est rayonnée vers la petite région de rayonnement gauche supérieure (24, 24A à 24C) par la source de lumière gauche supérieure (14, 14A à 14C) dans l'état de rayonnement de la totalité de la petite région de rayonnement, ou entre dans un état de non-rayonnement dans lequel la lumière n'est pas rayonnée vers la petite région de rayonnement gauche supérieure (24, 24A à 24C) par la source lumineuse gauche supérieure (14, 14A à 14C) ; et une commande d'obscurcissement/de non-rayonnement de la petite région de rayonnement droite supérieure qui commande de sorte que la petite région de rayonnement droite supérieure (26, 26A à 26C) entre dans un état obscurci dans lequel une quantité de lumière qui est rayonnée vers la petite région de rayonnement droite supérieure (26, 26A à 26C) par la source de lumière droite supérieure (16, 16A à 16C) est diminuée par rapport à une quantité de lumière qui est rayonnée vers la petite région de rayonnement droite supérieure (26, 26A à 26C) de la source de lumière droite supérieure (16, 16A à 16C) dans l'état de rayonnement de la totalité de la petite région de rayonnement, ou entre dans un état de non-rayonnement dans lequel la lumière n'est pas rayonnée vers la petite région de rayonnement droite supérieure (26, 26A à 26C) par la source lumineuse droite supérieure (16, 16A à 16C),
le dispositif de commande (9, 9A) est configuré pour, dans un cas où la carrosserie du véhicule (6) s'incline dans la direction d'inclinaison du véhicule soit vers la gauche, soit vers la droite dans un état de rayonnement de toute la petite région de rayonnement, exécuter au moins l'une de la commande d'obscurcissement/de non-rayonnement de la petite région de rayonnement gauche supérieur et d'obscurcissement/de non-rayonnement de la petite région de rayonnement droit supérieur.

2. Appareil de phare de véhicule à inclinaison (8, 8A) selon la revendication 1, dans lequel le dispositif de commande (9, 9A) est configuré pour :
exécuter la commande d'obscurcissement/de non-rayonnement de la petite région de rayonnement gauche inférieure dans un cas où la carrosserie de véhicule (6) s'incline dans la direction vers la gauche du véhicule à inclinaison dans l'état de rayonnement de la totalité de la petite région de rayonnement, et
exécuter la commande d'obscurcissement/de non-rayonnement de la petite région de rayonnement droit inférieure dans un cas où la carrosserie de véhicule (6) s'incline dans la direction vers la droite du véhicule à inclinaison dans l'état de rayonnement de la totalité de la petite région de rayonnement.

3. Appareil de phare de véhicule à inclinaison (8, 8A) selon la revendication 1 ou la revendication 2, dans lequel le dispositif de commande (9, 9A) est configuré pour :
ne pas exécuter la commande d'obscurcissement/de non-rayonnement de la petite région de rayonnement gauche supérieure dans un cas où la carrosserie de véhicule (6) s'incline dans la direction vers la gauche du véhicule à inclinaison dans l'état de rayonnement de la totalité de la petite région de rayonnement, et
ne pas exécuter la commande d'obscurcissement/de non-rayonnement de la petite région de rayonnement droit supérieure dans un cas où la carrosserie de véhicule (6) s'incline dans la direction vers la droite du véhicule à inclinaison dans l'état de rayonnement de la totalité de la petite région de rayonnement.

4. Appareil de phare de véhicule à inclinaison (8, 8A) selon l'une quelconque des revendications 1 à 3, dans lequel :
une pluralité de sources de lumière gauches inférieures (13A à 13C) sont disposées de manière à être alignées dans la direction de haut en bas de la carrosserie de véhicule ;
une pluralité de sources de lumière droites inférieures (15A à 15C) sont disposées de manière à être alignées dans la direction de haut en bas de la carrosserie de véhicule ;
une pluralité de sources de lumière gauches supérieures (14A à 14C) sont disposées de manière à être alignées dans la direction de haut en bas de la carrosserie de véhicule ;
une pluralité de sources de lumière droites supérieures (16A à 16C) sont disposées de manière à être alignées dans la direction de haut en bas de la carrosserie de véhicule ;
une pluralité de petites régions de rayonnement gauches inférieures (23A à 23C) sont formées par rayonnement de lumière par la pluralité de sources de lumière gauches inférieures (13A à 13C), et sont disposées de manière à être alignées dans la direction de haut en bas de la carrosserie de véhicule ;
une pluralité de petites régions de rayonnement droites inférieures (25A à 25C) sont formées par rayonnement de lumière par la pluralité de sources de lumière droites inférieures (15A à 15C), et sont disposées de manière à être alignées dans la direction de haut en bas de la carrosserie de véhicule ;
une pluralité de petites régions de rayonnement gauches supérieures (24A à 24C) sont formées par rayonnement de lumière par la pluralité de sources de lumière gauches supérieures (14A à 14C), et sont disposées de manière à être alignées dans la direction de haut en bas de la carrosserie de véhicule ; et
une pluralité de petites régions de rayonnement droites supérieures (26A à 26C) sont formées par rayonnement de lumière par la pluralité de sources de lumière droites supérieures (16A à 16C), et sont disposées de manière à être alignées dans la direction de haut en bas de la carrosserie de véhicule.

5. Appareil de phare de véhicule à inclinaison (8, 8A) selon la revendication 4, dans lequel :
un total du nombre de la pluralité de petites régions de rayonnement gauches inférieures (23A à 23C) et du nombre de la pluralité de petites régions de rayonnement gauches supérieures (24A à 24C) est supérieur au total du nombre de régions de rayonnement de centre inférieures (21) et du nombre de régions de rayonnement de centre supérieures (22) ; et
un total du nombre de la pluralité de petites régions de rayonnement droites inférieures (25A à 25C) et du nombre de la pluralité de petites régions de rayonnement droites supérieures (26A à 26C) est supérieur à un total du nombre de régions de rayonnement de centre inférieures (21) et du nombre de régions de rayonnement de centre supérieures (22).

6. Appareil de phare de véhicule à inclinaison (8, 8A) selon l'une quelconque des revendications 1 à 5, dans lequel :
une région de rayonnement est formée par la lumière qui est rayonnée vers au moins l'une parmi la région de rayonnement de centre inférieure (21), la région de rayonnement de centre supérieure (22), la petite région de rayonnement gauche inférieure (23, 23A à 23C), la petite région de rayonnement gauche supérieure (24, 24A à 24C), la petite région de rayonnement droite inférieure (25, 25A à 25C) et la petite région de rayonnement droite supérieure (26, 26A à 26C) ; et,
la petite région de rayonnement droite inférieure (25, 25A à 25C) est disposée en symétrie linéaire avec la petite région de rayonnement gauche inférieure (23, 23A à 23C) et la petite région de rayonnement droite supérieure (26, 26A à 26C) est disposée en symétrie linéaire avec la petite région de rayonnement gauche supérieure (24, 24A à 24C) par rapport à une ligne droite qui vient en intersection avec un axe central de la région de rayonnement dans l'état de rayonnement de la totalité de la petite région de rayonnement qui s'étend dans une direction avant-arrière de la carrosserie de véhicule, et qui s'étend dans une direction de haut en bas du véhicule à inclinaison.

7. Véhicule à inclinaison (1, 1A), comprenant :
une carrosserie de véhicule (6) configurée pour s'incliner dans la direction vers la gauche du véhicule à inclinaison lors d'un virage à gauche et pour s'incliner dans la direction vers la droite du véhicule à inclinaison lors d'un virage à droite ; et
l'appareil de phare de véhicule à inclinaison (8, 8A) selon l'une quelconque des revendications 1 à 6.
